# EUROPEAN PATENT SPECIFICATION

(11) **EP 1 767 873 B1**
(45) Date of publication and mention of the grant of the patent: **04.03.2009**
(21) Application number: 06015491.1
(22) Date of filing: 25.07.2006
(51) Int. Cl.: F24F 3/16, F24F 7/10, B01D 46/00

(54) **Air conditioning apparatus**
Klimaanlage
Dispositif de conditionnement d'air

(30) Priority: 22.09.2005 KR 20050088384; 22.09.2005 KR 20050088385; 22.09.2005 KR 20050088393; 22.09.2005 KR 20050088387
(43) Date of publication of application: 28.03.2007
(73) Proprietor: LG Electronics, Inc., Seoul (KR)
(72) Inventor: Song, Chang Hyun, Pusan-si, Gyeongsangnam-do (KR); Lee, Ho Beom, Janyoo-myun Kimhae-si Gyeongsangnam-do (KR); Park, Jong Hoon, Changwon-si Gyeongsangnam-do (KR); Kang, Dong Hoon, Pusan-si Gyeongsangnam-do (KR); Ko, Kang Myung, Susung-dong 4-ga Susung-gu Daegu-si (KR); Bang, Ki Suk, Pusan-si, Gyeongsangnam-do (KR)
(74) Representative: TER MEER - STEINMEISTER & PARTNER GbR

(56) References cited:
- EP-A- 1 559 963
- EP-A- 1 559 964
- EP-A- 1 621 823
- EP-A2- 0 348 011
- EP-A2- 0 550 366
- US-A- 5 348 563
- US-A1- 2005 272 364
- US-A1- 2005 287 946

## Description

### BACKGROUND OF THE INVENTION

### Field of the Invention

The present invention relates to an air conditioner,
and more particularly, to an air conditioning apparatus that can provide both ventilation and air cleaning.
**Description of the Related Art**

When a living thing breathes in a closed space, carbon dioxide increases with time, and thus it becomes more difficult for the living thing to breathe in the closed space. Therefore, closed spaces, such as an office where a lot of people works together or the interior of a car, should be periodically ventilated. A ventilation system can be generally used for this purpose.

Meanwhile, air purifiers are used for removing impurities from indoor air. Most commercial air purifiers are stand-type air purifiers that are placed on a floor when in use. However, since the stand-type air purifiers are placed on a floor, floating impurities such as dust cannot be effectively removed. Further, children or babies often damage such stand-type air purifiers by falling or improperly operating the stand-type air purifiers.

Furthermore, although floating impurities and odors can be removed from air using the air purifiers, carbon dioxide cannot be decreased using the air purifiers. Therefore, users have to open a window or a door periodically for ventilation.

To obviate this inconvenience of manual ventilation, both the air purifier and the ventilation system can be installed. However, purchasing and operating both the devices increases costs.

In addition, both the air purifier and the ventilation system of the relate art have a complex air flow structure. Thus, air cannot be smoothly circulated, causing air flow loss.
EP 1 559 964 A1 describes a ventilating and air purifying device. Herein, an air purifier has two flow passages through a case of the air purifier, a first flow passage for introducing outer air through an air supply duct, cleaning the outdoor air, and supplying the air into the room through an outlet, and a second one for discharging room air to an outside of the room through the case to an air discharge duct. For purifying the air supplied to the room, a filter is provided in the first flow passage between a blower and the outlet. In addition, a damper is provided to a part of the first flow passage in contact with the second flow passage, such that the damper can open/close a part of the first flow passage. In case of an opened damper, the room air introduced into the case through the inlet is guided to the blower by the damper, and, therefrom, to the room. According to this, the room air is purified by the air purifier, and supplied to the room. In case of a closed damper, the inlet and the air discharge duct are isolated from a guide duct, to isolate the first flow passage from the second flow passage. In this case, the room air introduced into the case through the inlet is guided to the air discharge duct, and the outdoor air introduced into the case through the air supply duct is guided to the blower, purified, and supplied to the room. Herein, the air supply duct may has a fan for forcing outdoor air to move toward the case.
EP 0 348 011 A2 describes a ceiling mounted air cleaner. Herein, a ceiling mounted air cleaner comprises a housing having an outer shell and an inner shell. A fan comprising fan blades and an electric motor is mounted inside of the inner shell, and at the bottom side of the housing, an air filter rests in an air filter frame which is provided with a grill or screen. When the air cleaner is operated, the fan blades are turned by the electric motor, thereby acting as centrifugal impellers, drawing air into the unit through the grill or screen and the filter and ejecting it outwardly and downwardly between the outer sides of the inner shell and the inner sides of the outer shell and through louvres along the upturned outside edges of the inner shell. A shroud and a restricted space between the inner shell and the outer shell prevent backflow of cleaned air into the low pressure area created within the inner shell by the action of the fan.
US 5,348,563 A describes an air purifying apparatus. Herein, the air purifier comprises a base including a top plate and a bottom plate enclosing in-between a plenum region, where a plurality of centrifugal fans for drawing room air into the apparatus are located. The bottom plate of the base includes a plurality of openings. Further, the air purifier includes baffles that are located within the plenum region and which substantially surround each of the centrifugal fans. The air exhausted from the fans is directed along the channels to an air exhaust outlet from which the air is exhausted to the room. In addition, the air purifier also includes filter assemblies for cleaning the room air that is drawn into the apparatus through air intake openings. Herein, a plurality of air filters are provided corresponding to the number of fans so that an air filter is associated with each fan.
EP 1 559 963 A1 describes a combination air purifier and air ventilator. Herein, an air purifier comprises a case, wherein an inlet and an outlet are provided, respectively, on a side of the case communicating with the room. The air purifier includes two passages passing through the case. One of the passage is a first passage for drawing external air via a supply duct into the case, purifying the air by an air purifying member, and supplying the cleaned air to the room via the outlet. Another one is a second passage for drawing indoor air through the inlet for passing the air through the case, and discharging the air to an outside via a return duct. Further, a damper is provided at a part of the first passage for opening or closing a part of the second passage. In case of an opened damper the air flowed into the case through the inlet is guided to a fan by an air guide, and supplied back into the room. Accordingly, the room air is purified by the air purifying member and supplied back into the room through the outlet. When the damper is closed, the room air drawn into the case through the inlet is guided to the return duct and an external air drawn into the case through the supply duct is directly supplied into the room after purifying through the outlet.

### SUMMARY OF THE INVENTION

Accordingly, the present invention is directed to an air conditioning apparatus that substantially obviates one or more problems due to limitations and disadvantages of the related art.

An object of the present invention is to provide an air conditioning apparatus that provides both ventilation and air-cleaning.

Another object of the present invention is to provide an air conditioning apparatus that can be mounted on a ceiling or a wall for effectively removing floating duct and preventing falling or damaging by children or babies.

A further another object of the present invention is to provide an air conditioning apparatus that purifies air using a filter in ventilation mode as well as in cleaning mode for supplying clean air.

A still further another object of the present invention to provide an air conditioning apparatus that has an improved air flow channel for minimizing flow loss in ventilation mode and cleaning mode.
This object is solved by the air conditioning apparatus of claim 1. Further advantages, refinements and embodiments of the invention are described in the respective sub-claims.

**BRIEF DESCRIPTION OF THE DRAWINGS**

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of an air conditioning apparatus with ventilation and air-cleaning functions according to the present invention;

Fig. 2 is an exploded perspective view of the air conditioning apparatus depicted in Fig. 1;

Fig. 3 is a vertical sectional view of the air conditioning apparatus depicted in Fig. 1;

Fig. 4 is a front perspective view of a front cover of the air conditioning apparatus according to the present invention;

Fig. 5 is a rear perspective view of the front cover depicted in Fig. 4;

Fig. 6 is a sectional view taken along line I-I' of Fig. 5, showing a first embodiment of a suction panel driving structure according to the present invention;

Fig. 7 is a sectional view showing a second embodiment of the suction panel driving structure according to the present invention;

Fig. 8 is a sectional view showing a third embodiment of the suction panel driving structure according to the present invention;

Fig. 9 is a perspective view of a cover guide of the air conditioning apparatus according to the present invention;

Fig. 10 is a front perspective view of a control panel of the air conditioning apparatus according to the present invention;

Fig. 11 is a rear perspective view of the control panel depicted in Fig. 10;

Fig. 12 is a plan perspective view of a grill of the air conditioning apparatus according to the present invention;

Figs. 13 and 14 are bottom perspective views of the grill depicted in Fig. 12;

Fig. 15 is a bottom perspective view of the grill with a filter mounted thereon;

Fig. 16 is an enlarged perspective view of portion A of Fig. 14, showing the grill before a control box is coupled to the grill;

Fig. 17 is an enlarged perspective view of portion A of Fig. 14, showing the grill after a control box is coupled to the grill;

Fig. 18 is a plan perspective view of a shroud of the air conditioning apparatus according to the present invention;

Fig. 19 is a bottom perspective view of the shroud depicted in Fig. 18;

Fig. 20 is a bottom perspective view of the air conditioning apparatus when the front cover, the cover guide, and the filter are removed;

Fig. 21 is a sectional view taken along line II-II' of Fig. 20;

Fig. 22 is an exploded perspective view of a filter of the air conditioning apparatus according to the present invention;

Fig. 23 is a front perspective view of an installation bar of the air conditioning apparatus according to the present invention;

Fig. 24 is a rear perspective view of the installation bar depicted in Fig. 23;

Fig. 25 is a bottom perspective view of a rear panel of the air conditioning apparatus according to the present invention;

Fig. 26 is a plan perspective view of the rear panel depicted in Fig. 25;

Fig. 27 is a sectional view taken along line III-III' of Fig. 25;

Fig. 28 is an exploded perspective view of the rear panel according to the present invention;

Fig. 29 is a perspective view of a shield member of the air conditioning apparatus according to the present invention;

Fig. 30 is a bottom perspective view of the air conditioning apparatus with the shield member according to the present invention;

Fig. 31 is a perspective view showing a first embodiment of an installation case of the air conditioning apparatus according to the present invention;

Fig. 32 is a perspective view showing a second embodiment of the installation case of the air conditioning apparatus according to the present invention;

Fig. 33 shows a first embodiment of installing the air conditioning apparatus in a building according to the present invention;

Fig. 34 is an exploded perspective view showing an air flow of the air conditioning apparatus in ventilation mode;

Fig. 35 is a bottom perspective view showing an air flow of the air conditioning apparatus in cleaning mode;

Fig. 36 shows a second embodiment of installing the air conditioning apparatus in a building according to the present invention; and

Fig. 37 shows the air conditioning apparatus connected to a heat recovery ventilator according to the present invention.
**DETAILED DESCRIBTION OF THE INVENTION**

Reference will now be made in detail to the preferred embodiments of the present invention, examples of which are illustrated in the accompanying drawings.

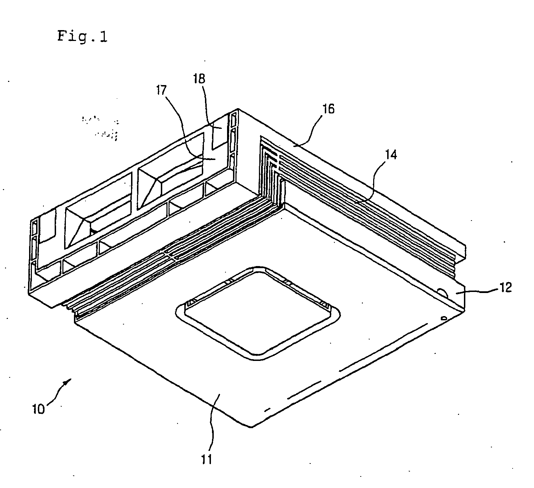

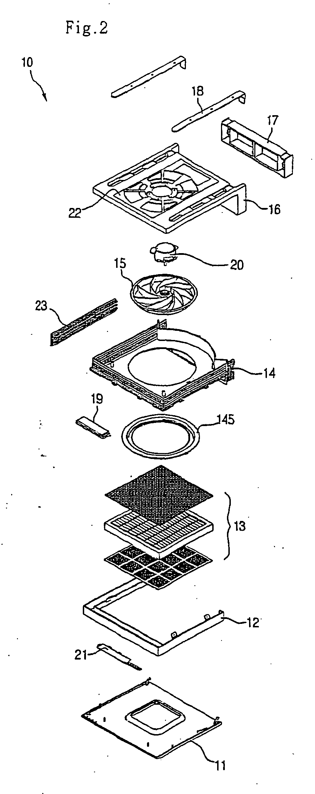

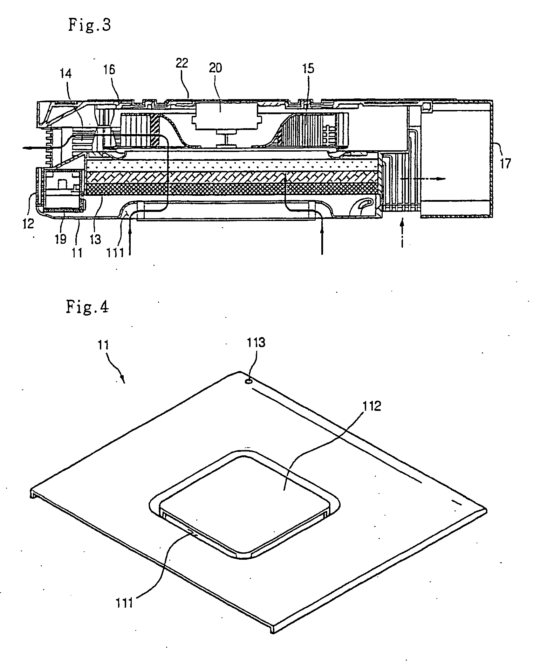

Fig. 1 is a perspective view of an air conditioning apparatus 10 with ventilation and air-cleaning functions according to the present invention, Fig. 2 is an exploded perspective view of the air conditioning apparatus 10, and Fig. 3 is a vertical sectional view of the air conditioning apparatus 10.

Referring to Figs. 1 to 3, the air conditioning apparatus 10 is designed to provide both ventilation and air cleaning. The air conditioning apparatus 10 includes: a front cover 11 having an air suction hole in a center portion; a cover guide 12 on which the front cover 11 is mounted; a grill 14 having cleaned air discharge holes on lateral sides and on which the cover guide 12 is slidably mounted; a filter 13 disposed in a lower portion of the grill 14 to remove impurities and odors from air; a control box 19 coupled to a lower edge of the grill 14; a control panel 21 detachably coupled to a lower portion of the cover guide 12; and a shield member 23 selectively shields screening the cleaned air discharge holes formed on the lateral sides of the grill 14. In detail, a main printed circuit board (PCB) substrate is disposed in the control box 19 for controlling the operation of the air conditioning apparatus 10, and a display PCB substrate is mounted on one side of a rear surface of the control panel 21 for display the operational state of the air conditioning apparatus 10. When the air conditioning apparatus 10 is installed between a wall and a ceiling, the cleaned air discharge holes of the -grill 14 facing the wall is screened by the shield member 23. In this case, air is discharged through the discharge holes located on a front and an opposite side of the grill 14.

The air conditioning apparatus 10 further includes a fan 15 disposed above the filter 13 for drawing indoor or outdoor air into the air conditioning apparatus 10, a shroud 145 detachably coupled to a lower portion of the grill 14 for guiding the air drawn by the fan 15, a fan motor 20 driving the fan 15, and a rear panel 16 having one side connected to an exhaust duct and a supply duct. The fan motor 20 is mounted on the rear panel 16.

The air conditioning apparatus 10 further includes a base panel 22 mounted on a top surface of the rear panel 16 for strengthen the rear panel 16, an installation case 17 coupled to one side of the rear panel 16 for allowing the rear panel 16 to be easily connected to the exhaust duct and the supply duct, and installation bars 18 detachably coupled to a top portion of the rear panel 16 for allowing the rear panel 16 to be easily mounted on a wall or a ceiling.

Hereinafter, an operation of the air conditioning apparatus 10 will be described when the air conditioning apparatus 10 is installed on a ceiling according to an embodiment of the present invention.

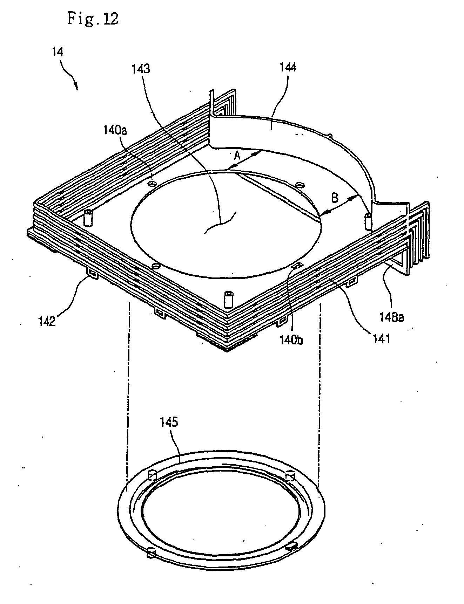

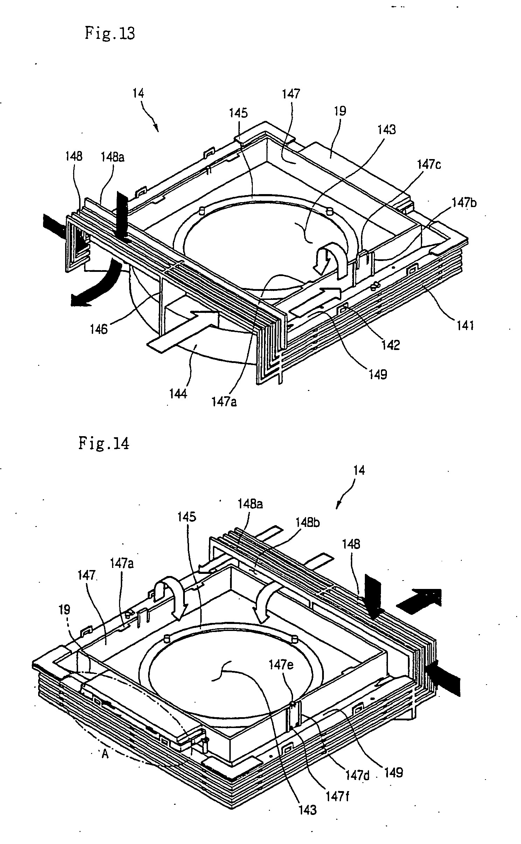

When the air conditioning apparatus 10 is installed on a ceiling, the front cover 11 faces a floor. In this state, the fan 15 is driven by the fan motor 20 when a cleaning mode is selected. Then, indoor air is sucked by the operation of the fan 15 into the air conditioning apparatus 10 through an indoor air suction hole 111 (refer to Fig. 3) formed in the front cover 11. Preferably, the fan 15 may be a centrifugal fan that sucks air in its axial direction and discharges the air in its radial direction. The sucked air passes through the filter 13 such that impurities can be removed from the air. After the filter 13, the air is guided to a top portion of the grill 14 by the shroud 145 where the air is further guided by an air guide 144 (refer to Fig. 12) to a discharge grill 141 (refer to Fig. 13) formed on a side of the grill 14. Through the discharge grill 141, the air is discharged back to an indoor area.

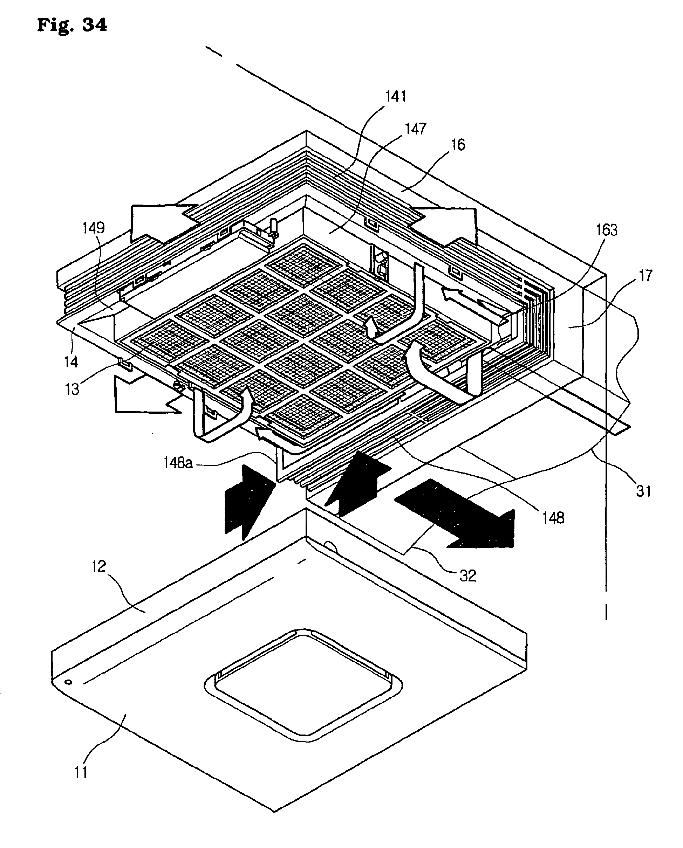

When a ventilation mode is selected, indoor air is sucked into the air conditioning apparatus 10 through an exhaust grill 148 (refer to Fig. 13) formed on a side of the grill 14, and then is directed toward an exhaust duct 32 (refer to Fig. 34) connected with the air conditioning apparatus 10. Meanwhile, outdoor air is sucked into the air conditioning apparatus 10 through a supply duct 31 (refer to Fig. 34) connected with the air conditioning apparatus 10. The sucked outdoor air passes through the filter 13 and is discharged from the air conditioning apparatus 10 to the indoor area through the discharge grill 141 of the grill 14.

A structure of the air conditioning apparatus 10 will now be more fully described with reference to accompanying drawings.

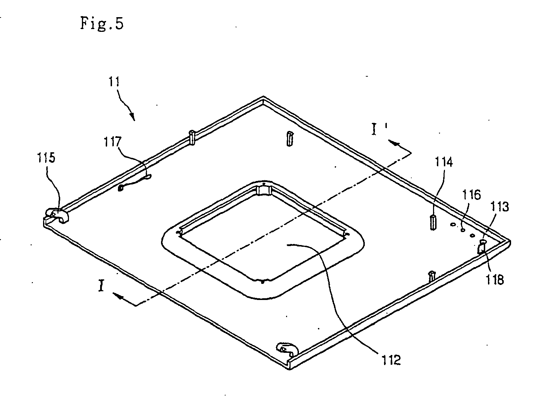

Fig. 4 is a front perspective view of the front cover 11 of the air conditioning apparatus according to the present invention, and Fig. 5 is a rear perspective view of the front cover 11.

Referring to Figs. 4 and 5, the front cover 11 includes a suction panel 112 having a predetermined size and formed in a center portion, the indoor air suction hole 111 facing the suction panel 112 to allow air flow from a side of the suction panel 112, a remote signal receiving hole 113 formed in a corner, pervious windows 116 spaced a predetermined distance from the remote signal receiving hole 113 and arranged at predetermined intervals, hinges 115 protruded from neighboring corners of a rear surface, a plurality of coupling hooks 114 formed on the rear surface on an opposite side to the hinges 115, a detection rib 118 formed on a corner of the rear surface, and a safe ring connecting member 117 fixed to an edge of the rear surface.

In detail, the suction panel 112 may be protruded from a front surface of the front cover 11. The indoor air suction holes 111 are formed in the side portions of the protruded suction panel 112. The suction panel 112 can be slidably mounted on the front cover 11 in a vertical direction or a horizontal direction or rotatably mounted on the front cover 11 so as to selectively open the indoor air suction holes 111. This structure will be more fully described later with reference to the accompanying drawings.

The hinges 115 extend from the rear surface of the front cover 11 by a predetermined length. When the front cover 12 is coupled to the cover guide 12, one ends of the hinges 115 slide into a front surface of the cover guide 12, and the plurality of coupling hooks 114 formed on the rear surface of the front cover 11 are inserted into the front surface of the cover guide 12.

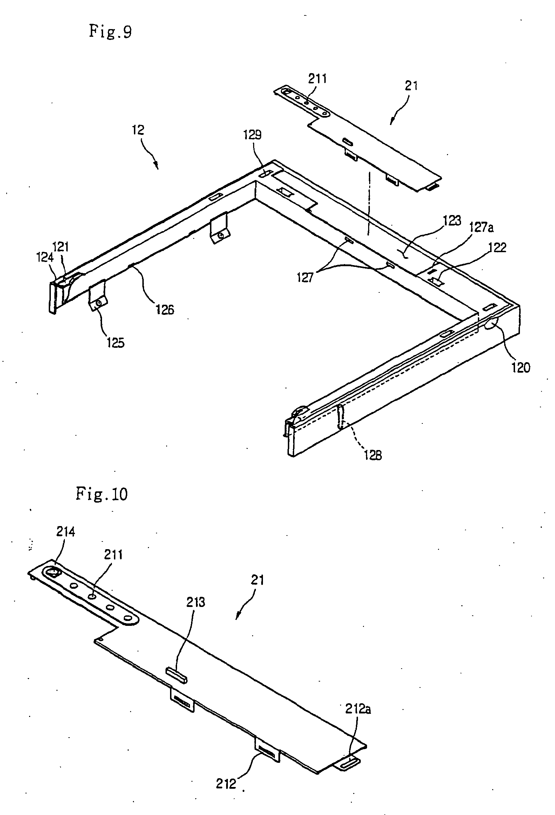

The detection rib 118 is used in turning off an alarming light that indicates the time for filter cleaning. In detail, generally, the filter 13 of the air conditioning apparatus 10 should be cleaned at intervals of about 2400 hours. To inform a user of the time for filter cleaning, a controller of the air conditioning apparatus 10 controls an LED to blink. When the user notices the blink of the LED and opens the front cover 11 for cleaning or replacing the filter 13, the controller of the air conditioning apparatus 10 detects the opening of the front cover 11. The controller turns off the LED when the front cover 11 is closed again. In more detail, when the front cover 11 is closed with respect to the air conditioning apparatus 10, the detection rib 118 is inserted into a detection rib hole 129 (refer to Fig. 9) formed in the front surface of the cover guide 12.On a rear surface of the cover guide 12 around the detection rib hole 129, a filter replacement detecting sensor (not shown) is mounted for detecting the opening and closing of the front cover 11 by sensing whether the detection rib 118 is inserted into the detection rib hole 129. Therefore, the controller of the air conditioning apparatus 10 can turn off the alarming LED when the front cover 11 is opened and closed by receiving corresponding signals from the filter replacement detecting sensor.

The remote signal receiving hole 113 has a predetermined diameter and is formed through the front cover 11, such that a signal from a remote control can be easily transmitted to a remote signal receiver (described later) through the remote signal receiving hole 113. The pervious windows 116 located adjacent to the remote signal receiving hole 113 are semitransparent. In detail, the pervious windows 116 are formed by preparing recesses in the rear surface of the front cover 11, such that light emitted from LEDs of the PCB substrate can be partially transmitted through pervious windows 116 having a thin thickness.

The safe ring connecting member 117 is connected to a safe ring 128 (refer to Fig. 9) mounted on an inner surface of the cover guide 12. Therefore, the front cover 11 can be prevented from falling to a floor when the air conditioning apparatus 10 is installed on a wall or a ceiling and a user pulls the front cover 11 away from the air conditioning apparatus 10 to open it.

Meanwhile, the front cover 11 can be coupled to the cover guide 12 by inserting the hinges 115 into holes 121 (refer to Fig. 9) formed in lower ends of the cover guide 12, and by pressing the front cover 11 toward the cover guide 12 to insert the coupling hooks 114 into coupling holes 122 (refer to Fig. 9) formed in the cover guide 12.

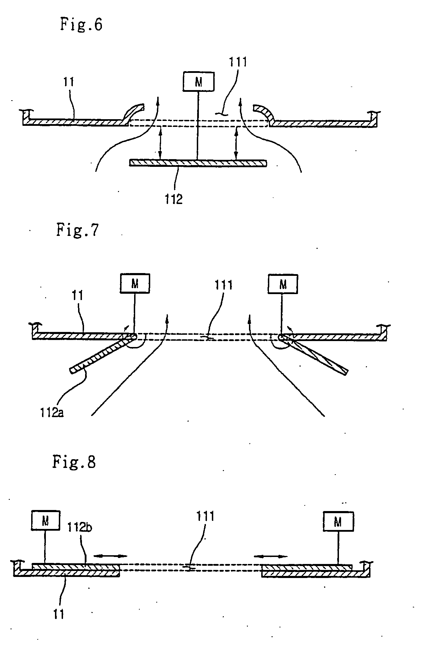

Fig. 6 is a sectional view taken along line I-I' of Fig. 5, showing a first embodiment of a suction panel driving structure according to the present invention.

Referring to Fig. 6, the suction panel driving structure is configured with the front cover 11, the suction panel 112 movable installed on a center portion of the front cover 11, and a driving motor M actuating the suction panel 112.

In detail, the driving motor M is connected to the suction panel 112. Preferably, the driving motor M can be rotated in both directions. The indoor air suction hole 111. is not larger than the suction panel 112 such that the indoor air suction hole 111 can be entirely closed by the suction panel 112.

When a ventilation mode is selected in this configuration, the fan 15 is driven to suck outdoor air, and the driving motor M is operated to lift the suction panel 112. That is, in the ventilation mode, the indoor air suction hole 111 is securely closed by the lifted suction panel 112. Outdoor air is sucked by the fan 15 from the supply duct 31 connected to the air conditioning apparatus 10, and then the outdoor air passes through the filter 13 for purification. The purified outdoor air is discharged to the indoor area through the discharge grill 141 formed on a side of the grill 14. In the ventilation mode, since the indoor air suction hole 111 is completely closed by the suction panel 112, indoor air is not taken into the air conditioning apparatus 10 for passing through the filter 13. In stead, the indoor air is taken into the air conditioning apparatus 10 through the exhaust grill 148 and directly expelled to the exhaust duct 32 connected to the air conditioning apparatus 10.

Meanwhile, in cleaning mode, the driving motor M rotates in a reverse direction to move the suction hole downwardly for opening the indoor air suction hole 111. Therefore, indoor air can be introduced into the air conditioning apparatus 10 through the indoor air suction hole 111. The introduced indoor air is cleaned while passing through the filter 13, and then discharged back to the indoor area through the discharge grill 141 of the grill 14.

When the air conditioning apparatus 10 is not in use or temporarily idle, the suction panel 112 is lifted by the driving motor M. That is, when the air conditioning apparatus 10 is not used, the indoor air suction hole 111 is completely closed by the suction panel 112, such that foreign substances such as duct cannot reach the filter 13 and stick to the filter 13.

Fig. 7 is a sectional view showing a second embodiment of the suction panel driving structure according to the present invention.

Referring to Fig. 7, the suction panel driving structure is characterized by at least one suction panel 112a pivotably mounted on a front cover 11.

In detail, one end of the suction panel 112a is rotatably mounted on the front cover 11 using a hinge or the like, and a driving motor M is provided to rotate the suction panel 112a. If one suction panel 112a is mounted on the front cover 11, the suction panel 112a has the same size as an indoor air suction hole 111. Further, one end of the suction panel 112a is rotatably mounted on an edge of the indoor air suction hole 111, and the suction panel 112a is rotated forwardly and backwardly by the driving motor M.

Two or more suction panels 112a can be mounted on the front cover 11. For example, if two suction panels 112a are mounted on the front cover 11 as shown in Fig. 7, one ends of the suction panels 112a are rotatably mounted on edges of the indoor air suction hole 111, respectively. The other ends of the suction panels 112a comes into contact with each other when the indoor air suction hole 111 is closed, such that indoor air cannot be introduced through the indoor air suction hole 111.

The suction panel 112a can be open to a predetermined angle by controlling the operation of the driving motor M. The opened angle of the suction panel 112a can be manually set by a user or automatically set by a controller. For example, when the speed of the fan 15 is set to high RPM, the opened angle of the suction panel 112a may be increased. On the contrary, when the speed of the fan 15 is set to low RPM, the angle of the suction panel 112a may be decreased. This operation can be controlled using a micro computer.

Fig. 8 is a sectional view showing a third embodiment of the suction panel driving structure according to the present invention.

Referring to Fig. 8, the suction panel driving structure is characterized by at least one suction panel that is horizontally movable on a front cover for opening and closing an indoor air suction hole.

In detail, the suction panel driving structure is configured with a front cover 11 having an indoor air suction hole 111 in a center portion, a suction panel 112b mounted on a top surface of the front cover 11 and movable in a horizontal direction, and a driving motor M driving the suction panel 112b.

In more detail, like in the embodiment shown in Fig. 7, one or more suction panels 112b can be mounted on the front cover 11. Preferably, two suction panels 112b may be mounted on the front cover 11. Each suction panel 12b is horizontally moved by the driving motor M for opening and closing the indoor air suction hole 111. One driving motor M can drive all the suction panels 112b, or a plurality of driving motors M can be drive the suction panels 112b, respectively.

For example, when two suction panels 112b are used and a user select the ventilation mode or turns off the air conditioning apparatus 10, the motor M is rotated to move the two suction panels 112b to a center of the indoor suction hole 111 until leading ends of the two suction panels 112b comes into contact with each other so as to close the indoor air suction hole 111.

Further, like in the embodiment of Fig. 7, the indoor air suction hole 111 can be opened to a desired degree by controlling the movement of the suction panel 112b.

Furthermore, the suction panel 112b can have a size slightly lager than that of the indoor air suction hole 111. In this case, the suction panel 112b is placed above the indoor air suction hole 111 even when the indoor air suction hole 111 is completely closed by the suction panel 112b. Alternatively, the suction panel can have the same size as the indoor air suction hole 111. In this case, the suction panel 112b can be inserted down into the indoor air suction hole 111 when it is fully closed to screen the indoor air suction hole 111. That is, when the indoor air suction hole 111 is completely closed by the suction panel 112b, the suction panel 112b can be flush with the front cover 11. Therefore, the outer surface of the front cover 11 may seem to be smooth.

In addition to the above-described embodiments, various other structures can be applied to the present invention for selectively closing the indoor air suction hole 111. Such modifications and variations are included in the scope of the present invention.

Fig. 9 is a perspective view of the cover guide 12 of the air conditioning apparatus 10 according to the present invention.

Referring to Fig. 9, when assembled, the front cover 11 is mounted on the cover guide 12, and the control panel 21 is detachably coupled to a top portion of the cover guide 12. The control panel 21 coupled to the cover guide 12 includes display windows 211 for displaying the operation state of the air conditioning apparatus 10, and a display PCB substrate having a LED and mounted on an opposite side to the display windows 211.

In detail, the cover guide 12 is formed into an n-shape. The cover guide 12 includes: hinge holes 121 formed in both ends for receiving the hinges 115 of the front cover 11; coupling holes 122 formed in a top surface for receiving the coupling hooks 114 of the front cover 11; a control panel receiving portion 123 formed in the top surface for receiving the control panel 21; and a sliding groove 124 formed in one end for slidingly receiving a coupling rib 148a (refer to Fig. 13) of the grill 14.

The cover guide 12 further includes: a plurality of reinforcement ribs 125 extending from a lower end and bent; a detection rib hole 129 formed in a corner for receiving the detection rib 118 of the front cover 11; coupling bosses 127 formed on an inner edge for coupling with coupling tabs 212 (refer to Fig. 10) of the control panel 21; a coupling hole 127a formed adjacent to the control panel receiving portion 123 for coupling with a coupling rib 212a (refer to Fig. 10) of the control panel 21; and the safe ring 128 connected to an inner surface; and tab hooks 126 protruded from side edges for coupling with coupling tabs 142 (refer to Fig. 12) of the grill 14.

In detail, the cover guide 12 forms the front side of the air conditioning apparatus 10 together with the front cover 11. In other words, the cover guide 12 and the front cover 11 forms the bottom side of the air conditioning apparatus 10 when the air conditioning apparatus 10 is mounted on a ceiling. The cover guide 12 prevents air taken into the air conditioning apparatus 10 from escaping through sides of the air conditioning apparatus 10, such that the air can be guide to the filter 13.

The control panel 21 is detachably mounted on a front upper portion of the cover guide 12. The control box 19 is mounted on a side of the cover guide 12 opposite side to the control panel 21. That is, the control box 19 is disposed between the cover guide 12 and the grill 14. Therefore, the control box 19 can be easily detached for repairing by removing the control panel 21, instead of disassembling the cover guide 12 entirely.

The cover guide 12 can be coupled to the grill 14 by slidingly inserting the coupling rib 148a of the grill 14 into the sliding groove 124 formed in a bent end of the cover guide 12, and by coupling the coupling tabs 142 of the grill 14 to the tab hooks 126 protruded from side edges of the cover guide 12. Then, the reinforcement ribs 125 extending from inner edge of the cover guide 12 are coupled to the grill 14.

Further, as described above, the front cover 11 can be coupled to the cover guide 12 by inserting the hinges 115 of the front cover 11 into the hinge holes 121 of the cover guide 12 and inserting the coupling hooks 114 of the front cover 11 into the coupling holes 122 of the cover guide 12. Then, the safe ring connecting member 117 of the front cover 11 is connected to the safe ring 128 of the cover guide 12, in order to prevent the front cover 11 from falling to a floor.

Handle grooves 120 are formed in both sides of the cover guide 12. A user can easily and safely detach the front cover 11 from the air conditioning apparatus 10 using the handle grooves 120.

Hereinafter, the control panel 21 will be more fully described, and assembling of the control panel 21 and the cover guide 12 will be described in detail with reference to the accompanying drawings.

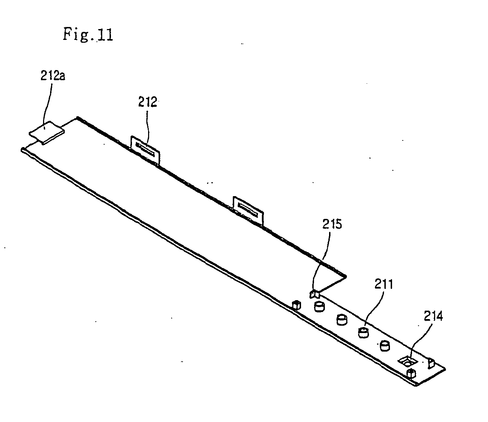

Fig. 10 is a front perspective view of the control panel 21 according to the present invention, and Fig. 11 is a rear perspective view of the control panel 21.

Referring to Figs. 10 and 11, the control panel 21 is coupled to the control panel receiving portion 123 formed in the top portion of the cover guide 12.

In detail, the control panel 21 includes the coupling tabs 212 and coupling rib 212a extending from edges, a rib handle 213 formed on a top surface, a remote signal receiving portion 214 and the display windows 211 formed on one end, and display PCB supporting ribs 215 protruded from a rear surface.

In more detail, the coupling tabs 212 extend downward from the edge of the control panel 21 in a vertical direction, and the coupling rib 212a is extends horizontally from the edge of the control panel 21. Further, the coupling rib 212a is protruded from the rear surface of the control panel 21 into a L-shape. The coupling rib 212a includes a protrusion formed on a top surface to a predetermined size. The protrusion is to be inserted into the coupling hole 127a formed in the cover guide 12. The coupling tabs 212 include holes having a predetermined size for receiving the coupling protrusions 127 formed on the cover guide 12.

Since the rib handle 213 is formed on the top surface of the control panel 21, a user can easily mount and detach the control panel 21 using the rib handle 213.

The display PCB substrate (not shown) is mounted on a side of the control panel 21 opposite to the remote signal receiving portion 214 and the display windows 211. The display PCB- substrate includes LEDs and a remote signal sensor for displaying the operational state of the air conditioning apparatus 10. The display PCB substrate mounted on the control panel 21 is spaced a predetermined distance from the surface of the control panel 21 by the display PCB supporting ribs 215. Therefore, even when the display PCB substrate is overheated, the possibility of fire or damaging the control panel 21 can be prevented. The remote signal senor of the display PCB substrate is located under the remote signal receiving portion 214, and the LEDs of the display PCB substrate is located under the display windows 211. The display windows 211 has a cylindrical shape extending a predetermined length from the rear surface of the control panel 21, such that light emitted from the LEDs can be projected through the display windows 211 without diffusion. The light projected through the display windows 211 passes through the transparent windows 116 of the front cover 11, such that a user can see the light.

The control panel 21 can be mounted on the cover guide 12 by inserting the coupling rib 212a into the rear surface of the cover guide 12 to fit the protrusion formed on the coupling rib 212a into the coupling hole 127a of the cover guide 12, and by coupling the coupling tabs 212 to the coupling protrusions 127 of the cover guide 12 while holding the control panel 21 against the top surface of the cover guide 12.

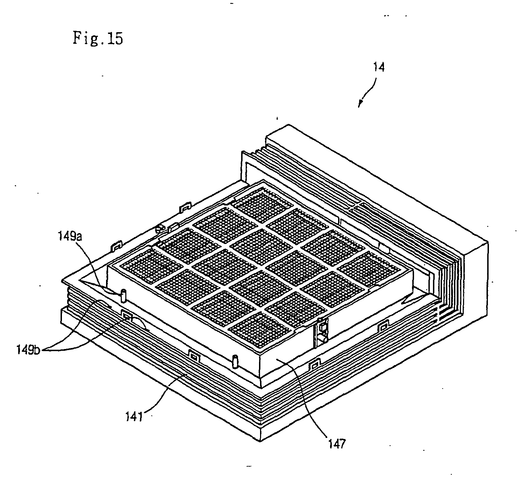

Fig. 12 is a plan perspective view of the grill 14 of the air conditioning apparatus according to the present invention, Figs. 13 and 14 are bottom perspective views of the grill 14, and Fig. 15 is a bottom perspective view of the grill 14 with the filter 13.

Referring to Figs. 12 to 15, the shroud 145 having a predetermined diameter is mounted on a center portion of the grill, 14 for guiding air drawn by the fan 15 in an upward direction.

In detail, an orifice 143 is formed through center portions of the grill 14 and the shroud 145. Further, the grill 14 includes the air guide 144 formed on one side of a top portion. The air guide 144 is curved with a predetermined curvature. Air passes through the orifice 143 and then guided by the air guide 144.

In more detail, the shroud 145 can be detachably mounted on the grill 14 or the shroud can be formed integrally with the grill 14. The inner edge of the shroud 145 is curved into a bell shape along air flow passing through the orifice 143 to minimize resistance to the air flow. The fan 15 is disposed on the shroud 145, such that the fan 15 can be easily removed by detaching the shroud 145 instead of disassembling the grill 14 entirely.

The grill 14 includes the discharge grill 141 on side portions. The discharge grill 141 includes a plurality of ribs arranged at regular intervals. The air guide 144 guide air to the discharge grill 141 where the air is discharged to the indoor area. Referring again to Fig. 12, a distance A between one end of the air guide 144 and the orifice 143 is smaller than a distance B between the other end of the air guide 144 and the orifice 143. In this structure, air dawn by the fan 15 flows to the discharge grill 141 while swirling counterclockwise. That is, the velocity of the swirling air increases as the swirling air is guided by the air guide 144 approaching toward the orifice 143 in B to A direction. Therefore, the air can be discharged through the discharge grill 141 at a high velocity, enabling the discharged air to circulate throughout the indoor area.

A portion of the grill 14 located adjacent to the air guide 144 is bent downwardly. Behind the air guide 144, a suction hole and an exhaust hole of the rear panel 16 are positioned when assembled. The downwardly bent portion of the grill 14 is divided into two parts (a first part and a second part) by a compartment wall 146. The first part of the downwardly bent portion of the grill 14 is formed with an outdoor air introducing hole 148b connected to the orifice 143, and the second part is blocked. The blocked second part forms the exhaust grill 148. An exhaust duct is connected to the exhaust grill 148, and a supply duct is connected to the first part where the outdoor air introducing hole 148b is formed. Therefore, outdoor air flowing to the indoor area is not mixed with indoor air flowing to the outdoor area owing to the compartment wall 146.

In detail, the exhaust grill 148 is directly connected to the exhaust duct. Indoor air is sucked through the exhaust grill 148 and then expelled to the outdoor area through the exhaust duct. The exhaust grill 148 is formed across a side and a bottom of the downwardly bent portion, such that more indoor air can be sucked through the exhaust grill 148. The plurality of ribs formed on the discharge grill 141 and the exhaust grill 148 are integrally connected. A portion of the grill 14 opposite to the exhaust grill 148 (i.e., the first part where the supply duct is connected) are closed, such that outdoor air supplied from the supply duct can be guided to the filter 13 through the outdoor air introducing hole 148b without leakage.

As shown in Fig. 13, the innermost rib formed on the downwardly bent portion of the grill 14 is the coupling rib 148a that slides into the sliding groove 124 of the cover guide 12 when the cover guide 12 is coupled to the grill 14.

The coupling tabs 142 extend downward from an edge of the grill 14. When assembled, the tab hooks 126 of the cover guide 12 are inserted into the coupling tabs 142.

The grill 14 includes a rectangular filter housing 147 that extends from a bottom surface to a predetermined height. The filter housing 147 receives the filter 13 (refer to Fig. 15). As shown in Fig. 13, outdoor air supplied from the supply duct flows along the outside of the filter housing 147 to the filter 13 over the filter housing 147.

The filter housing 147 includes a plurality of filter holding ribs 147a formed on a lower edge. When the air conditioning apparatus 10 is mounted on a ceiling, the filter housing 147 is located on a bottom surface of the grill 14. Therefore, if the front cover 11 is opened to clean or replace the filter 13, the filter 13 can fall undesirably from the filter housing 147. The filter holding ribs 147a prevents such an undesired falling of the filter 13.

When assembled, the rear panel 16 is placed on the top of the grill 14 in tight contact with the air guide 144. In detail, the grill 114 is positioned as shown in Fig. 12 and then the rear panel 16 is placed on the top of the grill 14 in tight contact with the air guide 144. Therefore, outdoor air sucked from the supply duct cannot flow between the air guide 144 and the rear panel 16 toward the discharge grill 141. That is, the outdoor air surely passes through the filter 13 in a bottom-to-top direction of the filter 13.

The grill 14 further includes a slope 149 on a lower edge. A lower end of the slope 149 reaches the filter housing 147. Therefore, outdoor air supplied from the supply duct flows along the filter housing 147 and the slope 149 and then reaches the filter 13 along an inner surface of the cover guide 12 mounted on the bottom side of the grill 14.

A CO₂ sensor or a volatile organic compounds (VOC) senor is mounted on one side of an outer surface of the filter housing 147. In detail, as one way of evaluating air pollution, the CO₂ sensor is used to measure the CO₂ level of the indoor air. The VOC sensor measures the VOC level of the indoor air for determining how much harmful substances are contained in the indoor air. Here, the term VOC (volatile organic compounds) is used to denote all kinds of organic compounds that are contained in air in gas phase, although they are in solid or liquid state under room temperature/pressure. High VOC level causes painful symptoms or diseases such as respiratory diseases, allergic diseases, and headaches.

The CO₂ sensor or the VOC sensor can be installed in the air conditioning apparatus 10 as a built-in device and controlled by a controller. Alternatively, such a sensor can be mounted on a wall or a ceiling as a separate device. In this case, the senor can be controlled with a remote control.

In the former case, the sensor can be mounted on one side of the grill 14. Particularly, the filter housing can include a CO₂ sensor mounting portion and/or a VOC sensor mounting portion on an outer surface.

The CO₂ sensor mounting portion includes CO₂ sensor mounting ribs 147b formed on one side of the outer surface of the filter housing 147, and a CO₂ sensor fixing hook 147c formed between the CO₂ sensor mounting ribs 147b and having a predetermined elasticity.

The VOC sensor mounting portion includes VOC sensor mounting ribs 147d formed on one side of the outer surface of the filter housing 147, and a VOC sensor fixing hook 147e formed between the VOC sensor mounting ribs 147d and having a predetermined elasticity, and supporting ribs 147f for supporting the VOC sensor. The mounting ribs 147b and 147d extend vertically and have a predetermined length for slidingly receiving the sensors. The fixing hooks 147c and 147e are formed on a lower end of the filter housing 147 and have a predetermined length for hooking top portions of the sensors. The CO₂ sensor mounting portion and the VOC sensor mounting portion can be formed on the same surface of the filter housing 147 or on opposing surfaces of the filter housing 147.

The grill 14 further includes shroud coupling holes 140a and a rib hole 140b in an inner surface. The shroud coupling holes 140a and the rib hole 140b are spaced a predetermined distance from the orifice 143. The shroud 145 includes corresponding portions on a bottom surface and a top surface for coupling with the shroud coupling holes 140a and the rib hole 140b. The coupling portions of the shroud 145 will be described later in detail.

The grill 14 further includes control box coupling bosses 149a between the filter housing 147 and the slope 149, and control box coupling ribs 149b extending form an edge of the slope 149 and bent at a predetermined angle. When assembled, the coupling ribs 147b are coupled to one side of a bottom surface of the control box 19, and the coupling bosses 149a are coupled to the other side of the bottom surface of the control box 19 by fasteners such as screws. Therefore, the control box 19 can be securely fixed to the bottom of the grill 14. Hereinafter, the installation of the control box 19 will be more fully described with reference to the accompanying drawings.

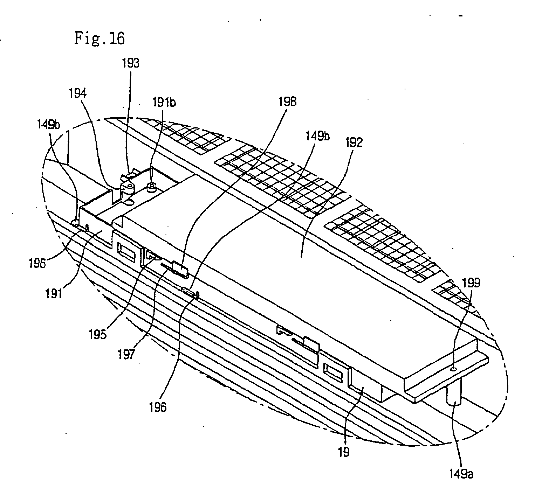

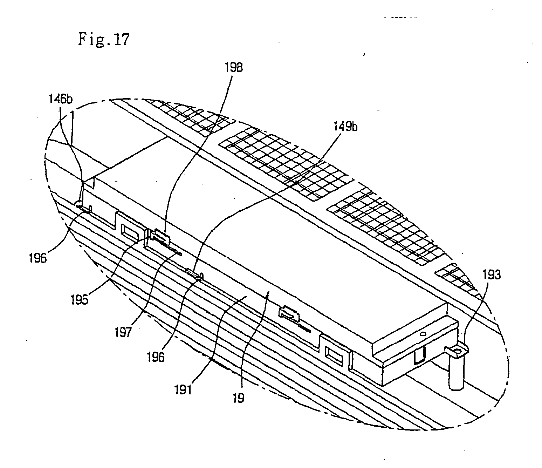

Fig. 16 is an enlarged perspective view of portion A of Fig. 14, showing the grill 14 before the control box 19 is coupled to the grill 14, and Fig. 17 is an enlarged perspective view of portion A of Fig. 14, showing the grill after the control box 19 is coupled to the grill 14.

Referring to Figs. 16 and 17, the control box 19 includes a housing 19 in which a main PCB substrate is accommodated, and a cover 192 covering a top portion of the housing 191.

In detail, the housing 191 has a rectangular shape and includes a substrate receiving room. The housing 191 further includes fixing ribs 193 extending from both side ends of a lower surface, substrate supporting ribs (not shown) arranged on an inner bottom surface at regular intervals, and substrate coupling bosses 191 formed on corners of the inner bottom surface. The housing 191 further includes cover coupling ends 194 formed on both side edges for coupling with the cover 192, bent insert ribs 196 formed on a front bottom portion, and coupling hooks 195 and guide ribs 197 formed on a font top edge.

In more detail, the fixing ribs 193 include coupling holes, such that fasteners can be inserted into the control box coupling bosses 149a of the grill 14 through the coupling holes of the fixing ribs 193. The PCB substrate is disposed on the substrate supporting ribs such that the PCB substrate can be placed off the housing 191. Therefore, heat generated from the PCB substrate is not readily transferred to the housing 191 by conduction. The PCB substrate can be firmly fixed to the housing 191 by fitting fasteners into the substrate coupling bosses 191b.

The cover 192 includes wings on both sides, housing coupling holes 199 formed in the wings, and coupling ribs 198 formed on a front lower edge.

In detail, the cover 192 is coupled to the housing 191 by inserting fasteners through the housing coupling holes 199 of the cover 192 and the holes formed in the housing coupling ends 194 of the housing 191. Before inserting the fasteners, the coupling ribs 198 of the cover 192 are slid to the coupling hooks 195 of housing 191.

Further, the insert ribs 196 formed on the housing 191 are slid into the control box coupling ribs 149b.

In detail, the control box coupling ribs 149b are bent into a "┌" shape, such that the insert ribs 196 can be slid into the bent portions. When the insert ribs 196 are fully slid into the control box coupling ribs 149b, the fixing ribs 193 are placed on the control box coupling bosses 149a. Then, fasteners such as screws are inserted into the control box coupling bosses 149a through the fixing ribs 193. In this way, the housing 191 can be securely fixed to the grill 14.

Further, the coupling ribs 198 formed on the front of the cover 192 are slidingly coupled to the coupling hooks 195 of the housing 191.

In detail, the coupling hooks 195 have a similar shape to the shape of the control box coupling ribs 149b. The coupling hooks 195 are formed into a hook shape by broadening one ends in a downward direction. The coupling ribs 198 are also formed into a hook shape by extending one end upwardly. Therefore, after the coupling ribs 198 are fully slid into the coupling hooks 195, the coupling ribs 198 and the coupling hooks 195 are not easily separated. The guide ribs 197 are horizontally located at a predetermined distance from the coupling hooks 195 for guiding the sliding of the coupling ribs 198. That is, the coupling ribs 198 are inserted into the coupling ribs 195 while sliding on the guide ribs 197.

When the coupling ribs 198 are fully inserted into the coupling hooks 195, the housing coupling holes 199 are placed on the coupling ends 194. Then, fasteners such as screws are inserted into the coupling ends 194 through the housing coupling holes 199.

The housing 191 and the cover 192 are covered with a metal plate. Therefore, even when the PCB substrate accommodated in the housing 191 is overheated and burned, other components can be protected.

With this structure, the housing 191 can be easily mounted on the grill 14 using fewer fasteners.

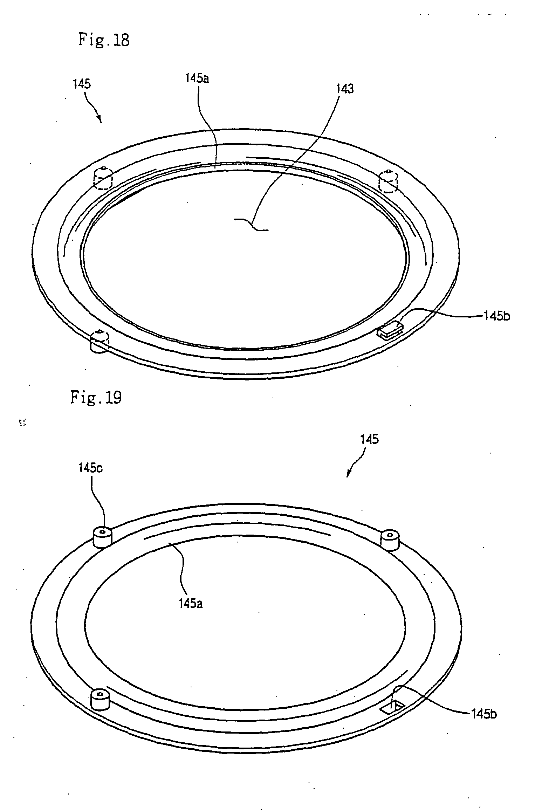

Fig. 18 is a plan perspective view of the shroud 145 according to the present invention, and Fig. 19 is a bottom perspective view of the shroud 145.

Referring to Figs. 18 and 19, the shroud 145 is coupled to the grill 14 at the orifice 143 for guiding air up to the rear panel 16.

In detail, the shroud 145 includes a bell mouth 145a formed on an inner edge and having a predetermined curvature, a plurality of coupling bosses 145b formed on a bottom surface, and a coupling rib 145b protruded from a top surface. The coupling rib 145b can be formed by lancing.

In more detail, as shown in Fig. 14, the shroud 145 is mounted on the bottom surface of the grill 14. Since Fig. 14 is a bottom perspective view of the grill 14, the shroud 145 is mounted on a top surface of the grill 14 in Fig. 14. The coupling bosses 145c include through-holes corresponding to the shroud coupling holes 140a (refer to Fig. 12) formed in the grill 14. Fastens such as screws are inserted through the coupling bosses 145c and the shroud coupling holes 140a. When assembled, the top surface of the shroud 145 makes tight contact with the bottom surface of the grill 14, and the coupling bosses 145c face a floor. The coupling rib 145b formed on the top surface of the shroud 145 is inserted into the rib hole 140b (refer to Fig. 12) formed in the grill 14.

The mounting of the shroud 145 on the grill 14 will now be more fully described. First, the coupling rib 145b is inserted into the rib hole 140b. Next, the top surface of the shroud 145 is abutted against the bottom surface of the grill 14. Then, fasteners such as screws are inserted through the shroud coupling holes 140a and the coupling bosses 145c.

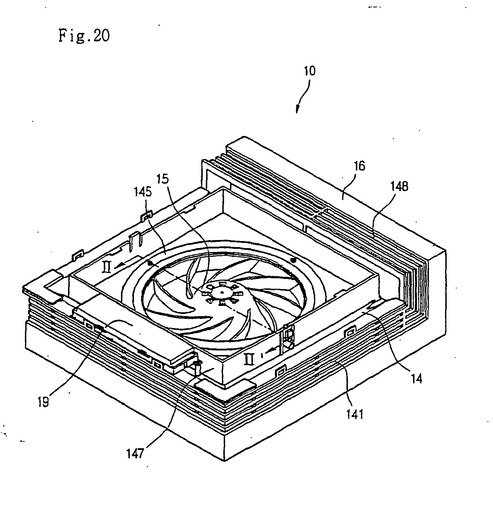

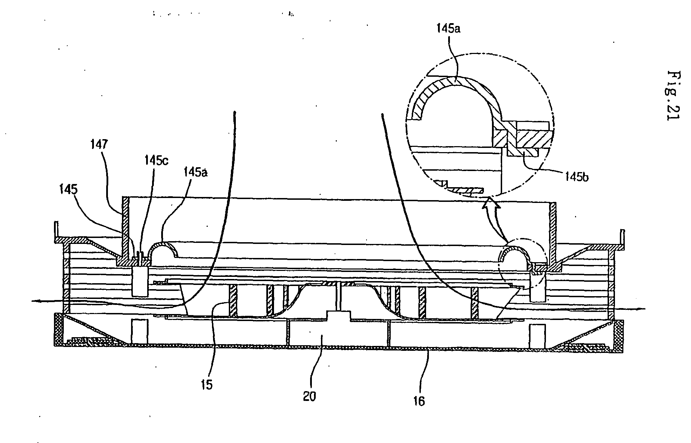

Fig. 20 is a bottom perspective view of the air conditioning apparatus 10 when the front cover 11, the cover guide 12, and the filter 13 are removed, and Fig. 21 is a sectional view taken along line II-II' of Fig. 20.

Referring to Figs. 20 and 21, in the air conditioning apparatus 10, the grill 14 is mounted on the bottom of the rear panel 16, and the shroud 145 is mounted on the center of the bottom surface of the grill 14. The fan 15 is disposed between the grill 14 and the rear panel 16.

In detail, the fan 15 (or the fan motor 20) disposed between the grill 14 and the rear panel 16 can be easily detached for repairing or replacement without disassembling the entire air conditioning apparatus 10.

In more detail, to repair or replace the fan 15, the front cover 11 is opened and the filter 13 disposed at a lower portion of the grill 14 is removed to expose the shroud 145. Next, the shroud 145 is removed by removing fasteners from the coupling bosses 145c of the shroud 145 and releasing the coupling rib 145b from the rib hole 140b. Since the orifice 143 formed in the center of the grill 14 has substantially the same size as the fan 15, the fan 15 can be easily detached after fasteners inserted into ends of the fan motor 20 are removed.

Owing to this structure, even after the air conditioning apparatus 10 is installed on a wall or a ceiling, the fan 15 or the fan motor 20 can be easily removed to repair or replace it without disassembling the air conditioning apparatus 10. Further, it is not required to remove the grill 14 from the rear panel 16 to detach the fan 15 or the fan motor. Therefore, the air conditioning apparatus 10 can be easily assembled and repaired.

Furthermore, since the shroud 145 includes the bell mouth 145a on its inner edge portion, air can move up to the fan 15 under less pneumatic resistance.

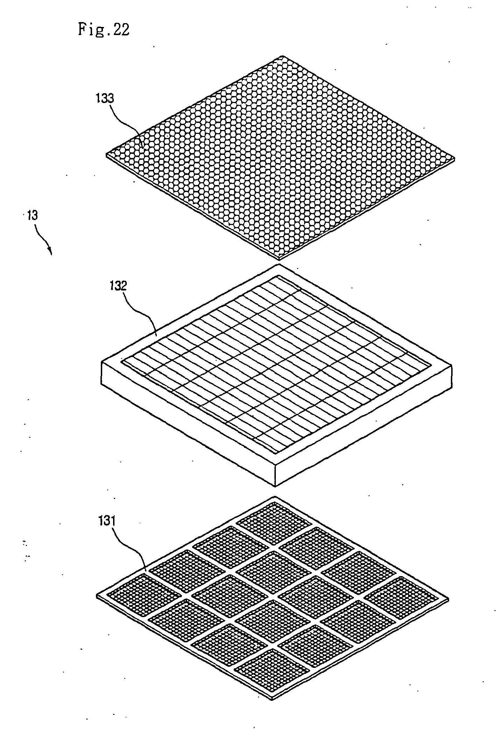

Fig. 22 is an exploded perspective view of the filter 13 according to the present invention.

Referring to Fig. 22, the filter 13 includes a pre filter 131 removing dust particles having a relatively large size, a high efficiency particulate air filter (HEPA) filter 132 removing tiny duct particles that are not removed by the pre filter 131, and a deodorization filter 133 removing odors.

In detail, the HEPA filter 133 can remove tiny dust particles having a size larger than 0.3 µm up to 99%. Further, the HEPA filter 133 can remove mildew, ticks, or the like. Since the filter 13 has a triple structure, even tiny foreign substances can be almost perfectly removed from air passing through the filter 13. Therefore, clean air can be discharged form the air conditioning apparatus 10 to an indoor area.

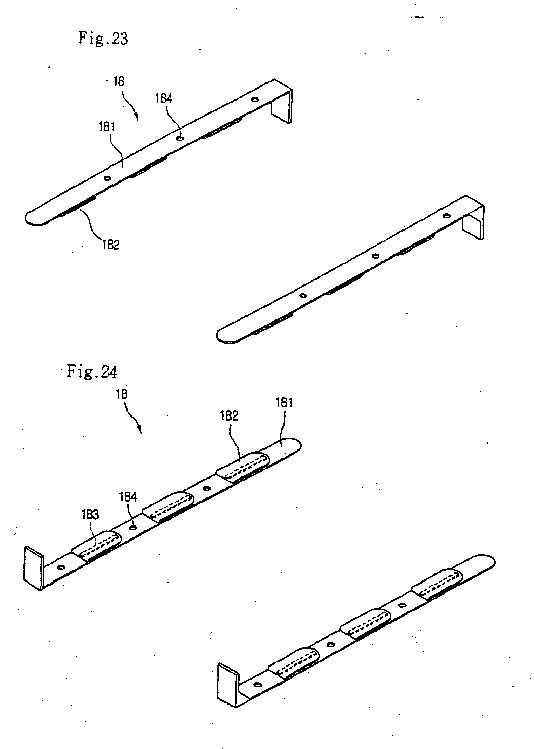

Fig. 23 is a front perspective view of the installation bars 18 according to the present invention, and Fig. 24 is a rear perspective view of the installation bars 18.

Referring to Figs. 23 and 24, the installation bar 18 has a predetermined length and width. The installation bar 18 has a downwardly-bent end for coupling with the installation case 17.

In detail, the installation bar 18 includes a bracket 181 having a predetermined length, bent tabs 182 extending from a bottom surface of the bracket 181 and bent into a L-shape, fixing ribs 183 formed on inner surfaces of the bent tabs 182 in a length direction, and coupling holes 184 formed through the bracket at predetermined intervals.

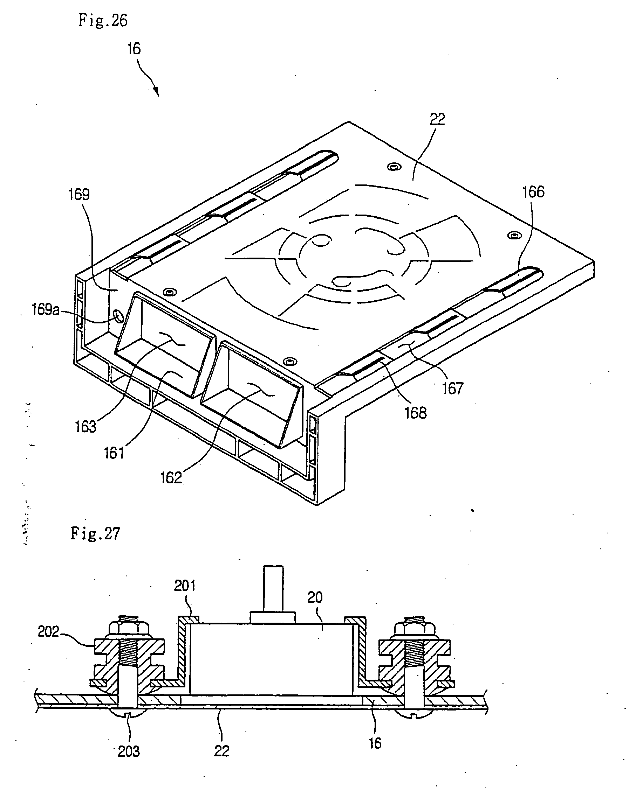

In more detail, the bent tabs 182 are formed on the bottom surface of the bracket 181 at regular intervals. When assembled, the bracket 181 is disposed on a bracket surface 166 (refer to Fig. 26) formed on a top portion of the rear panel 16, and the bent tabs 182 are inserted into bent tab holes 167 (refer to Fig. 26) formed on the top portion of the rear panel 16. The fixing ribs 183 are inserted into rib slits 168 (refer to Fig. 26) formed in the top portion of the rear panel 16.

The installation bar 18 is fixed to a place on which the air conditioning apparatus 10 is to be mounted. In detail, the long side of the bracket 181 is attached to an installation place such as a ceiling, and fasteners are fixed to the ceiling through the coupling holes 184 for securely fixing the installation bar 18 to the ceiling. Then, the air conditioning apparatus 10 is coupled to the fixed installation bar 18. The installation bar 18 and the installation case 17 can be fixed to a wall or a ceiling when a building is constructed.

In detail, after the installation bar 18 is fixed to the ceiling, the rear panel 16 is pushed against the installation bar 18 for inserting the bent tabs 182 of the installation bar 18 into the bent tab holes 167. Then, the rear panel 16 is pushed toward a wall for inserting the fixing ribs of the installation bar 18 into the rib slits 168 of the rear panel 16. That is, the air conditioning apparatus 10 can be simply mounted on the ceiling by pushing the air conditioning apparatus 10 toward the wall while holding the air conditioning apparatus 10 against the ceiling. The air conditioning apparatus 10 can be easily detached from the ceiling by pulling the air conditioning apparatus 10 forwardly and downwardly.

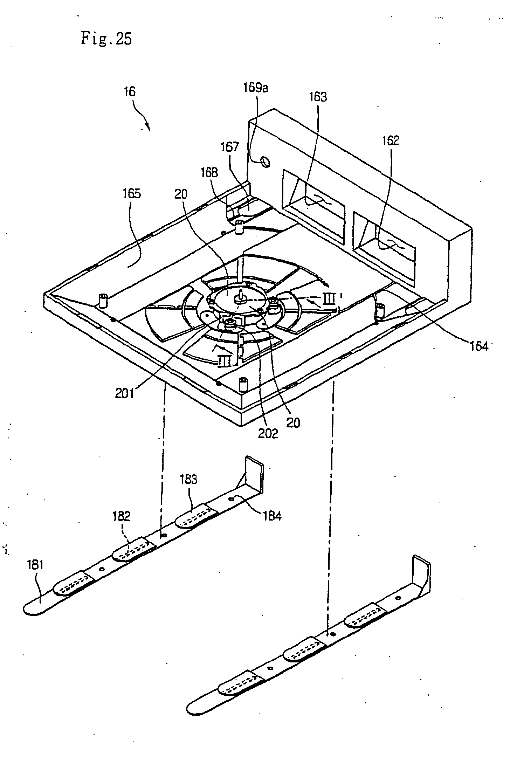

Fig. 25 is a bottom perspective view of the rear panel 16 according to the present invention, and Fig. 26 is a plan perspective view of the rear panel 16.

Referring to Figs. 25 and 26, the rear panel 16 of the air conditioning apparatus 10 can be mounted on a ceiling using the installation bar 18.

In detail, the rear panel 16 includes an exhaust hole 162 formed in one side and connected to an exhaust duct, a suction hole 163 formed beside the exhaust hole 162 and connected to a supply duct, an installation bar mounting structure formed on both side of a top surface, an air guide rib 164 formed on a bottom surface and having the same curvature as the air guide 144 of the grill 14, and a discharge guide 165 formed on both sides of the bottom surface at a predetermined angle.

In more detail, the rear panel 16 includes one side bent downward at right angles, and the exhaust hole 162 and the suction hole 163 are formed in the bent portion of the rear panel 16. The bent portion of the rear panel 16 is recessed to a predetermined depth, thereby forming an install case receiving portion 169. A wiring penetration hole 169a is formed through one side of the install case receiving portion 169, such that wiring can be connected to inner electric components through the wiring penetration hole 169a. Guide ribs 161 are formed on edges of the suction hole 163 and the exhaust hole 162 to a predetermined length, preventing leakage of air passing through the suction hole 163 and the exhaust hole 162. Each of the guide ribs 161 has a lower edge longer than an upper edge. Therefore, leakage of suction air and exhaust air can be prevented, regardless of whether the supply duct and the exhaust duct are horizontally connected to the rear panel 16 through a wall or vertically connected to the rear panel 16 through a ceiling. In detail, when the supply duct and the exhaust duct are horizontally connected to the air conditioning apparatus 10, horizontal air flow channels are formed. When the supply duct and the exhaust duct are vertically connected to the air conditioning apparatus 10, air flow channels are bent at right angles. To install the air conditioning apparatus 10 on a wall or ceiling regardless of the positions of the supply duct and the exhaust duct and prevent air leakage between the air conditioning apparatus 10 and the supply duct and the exhaust duct, the lower edges of the guide ribs 161 are longer than the upper edges of the guide ribs 161. Meanwhile, the installation case 17 is disposed between the air conditioning apparatus 10 and two ducts. The installation case 17 will be described later in detail with reference to the accompanying drawings.

The discharge guide 165 is detachably coupled to the rear panel 16 to guide air sucked by the fan 15 to the discharge grill 141 of the grill 14. As mentioned above, the base panel 22 formed of a metal is attached on the top of the rear panel 16 to increase the strength of the rear panel 16. That is, the rear panel 16 is prevented from bending by the weight of a motor mounted on a lower portion of the rear panel 16.

The installation bar mounting structure of the rear panel 16 includes the bracket surface 166, the bent tab holes 167, and the rib slits 167. When assembled, the bent tabs 182 of the installation bar 18 are inserted into the bent tab holes 167, the fixing ribs 183 of the installation bar 18 are inserted into the rib slits 168.

In detail, first, the installation bar 18 is fixed to a ceiling. Next, the bent tabs 182 are inserted into the bent tab holes 167 while holding the rear panel 16 against the installation bar 18 fixed to the ceiling. Then, the fixing ribs 183 are inserted into the rib slits 168 of the rear panel by pushing the rear panel 16 to a wall. That is, the air conditioning apparatus 10 can be easily mounted on the ceiling by pushing the air conditioning apparatus 10 to the wall while holding the air conditioning apparatus 10 against the ceiling. Further, the air conditioning apparatus 10 can be easily detached by pulling the air conditioning apparatus 10 in a forward direction and in a downward direction.

The fan motor 20 is mounted on the center of the bottom surface of the rear panel 16, and a motor mount 201 encloses the fan motor 20. The motor mount 201 is coupled to the rear panel 16 using vibration damping members 202 and fasteners.

The air guide rib 164, which is formed on the bottom surface of the rear panel 16 and have the same curvature as the air guide 144, makes contact with an end of the air guide 144 when the rear panel 16 and the grill 14 are coupled. Therefore, outdoor air introduced into the air conditioning apparatus 10 through the suction hole 163 can be prevented from flowing directly to the fan 15. Air sucked by the fan 15 and cleaned by the filter 13 is guided to the discharge grill 141 by the discharge guide 165. Further, since the discharge guide 165 is disposed just under the installation bar mounting structure, air can be prevented form escaping through the rib slits 168 or the bent tab holes 167.

Fig. 27 is a sectional view taken along line III-III' of Fig. 25.

Referring to Fig. 27, the fan motor 20 is mounted on the bottom surface of the rear panel 16 and supported by the motor mount 201. The vibration damping members 202 are coupled to ends of the motor mount 201 and fixed to the rear panel by fasteners.

In detail, during operation, the fan motor 20 generates noise and vibration. These noise and vibration can be transmitted to other components of the air conditioning apparatus 10, causing damage to them. The vibration damping members 202 absorbs the vibration transmitted from the fan motor 20 through the motor mount 201.

Further, since the fan motor 20, the motor mount 201, and the vibration damping member 202 are separately provided and assembled together, vibration disappears rapidly while transferring therebetween. In detail, the fan motor 20 is coupled to the motor mount 201 using fasteners. The motor mount 201 is not directly mounted on the rear panel 16. Instead, the vibration damping members 202 are disposed between the motor mount 201 and the rear panel 16, and fasteners are applied to the vibration damping members 202 to fix the motor mount 201.

That is, the fan motor 20 is not directly coupled to the rear panel 16, and the motor mount 201 is not directly coupled to the rear panel 16. Therefore, vibration generated by the fan motor 20 is not directly transmitted to the rear panel 16. In addition, the vibration damping member 202 includes a groove formed in an outer surface and having a predetermined depth. Vibration from the fan motor 20 is further damped by the groove formed in the vibration damping member 202.

Furthermore, since the metal base panel 22 is mounted on the top of the rear panel 16, the rear panel 16 can stably support the weights of the fan motor 20 and the fan 15 coupled to a shaft of the fan motor 20.

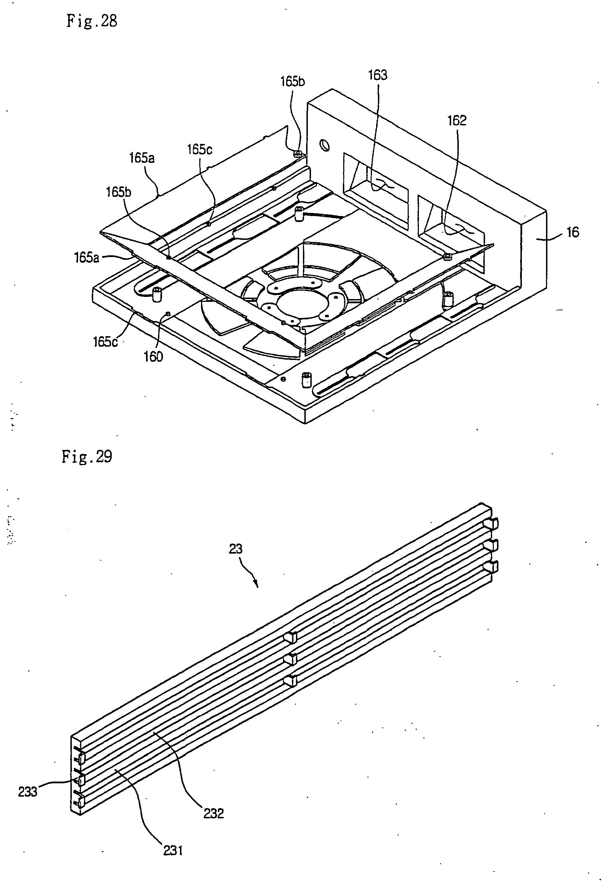

Fig. 28 is an exploded perspective view of the rear panel 16 according to the present invention.

Referring to Fig. 28, the discharge guide 165 is detachably coupled to the lower portion of the rear panel 16, and the base panel 22 is mounted on the top portion of the rear panel 22.

In detail, the discharge guide 165 coupled to the rear panel 16 is sloped down from a bottom edge of the rear panel 16.

The discharge guide 165 has a U-shape corresponding to three neighboring edges of the rear panel 16. The discharge guide 165 includes a plurality of protruded stoppers 165a formed on outer edges and coupling bosses formed on inner edges.

The rear panel 16 includes stopper recesses 165c formed in edges for receiving the protruded stoppers 165a and coupling bosses 160 corresponding to the coupling bosses 165b.

With this structure, the protruded stoppers 165a of the discharge guide 165 are inserted into the stopper recesses 165c of the rear panel 16, and fasteners such as screws are fitted into the coupling bosses 165b 160 of the discharge guide 165 and the rear panel 16.

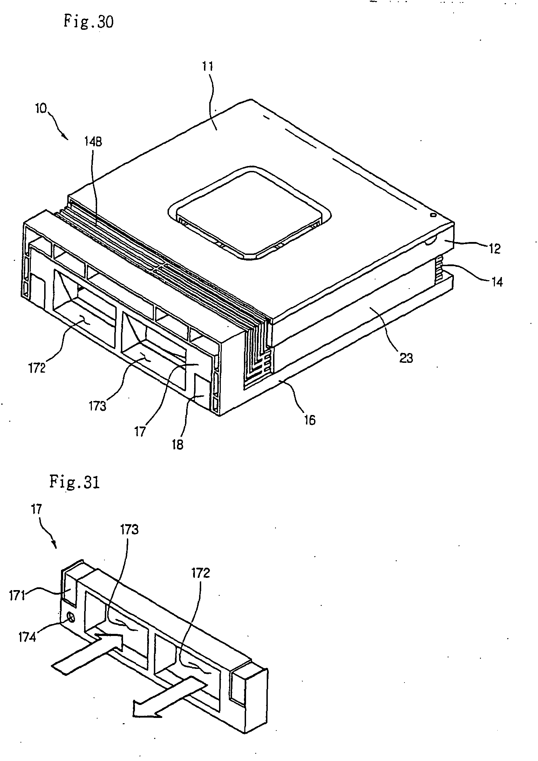

Fig. 29 is a perspective view of the shield member 23 according to the present invention, and Fig. 30 is a bottom perspective view of the air conditioning apparatus with the shield member 23 according to the present invention.

Referring to Figs. 29 and 30, the air conditioning apparatus 10 includes the discharge grill 141 on a side portion and the exhaust grill 148 on a bottom portion. In detail, the discharge grill 148 is formed on front, left, and right sides of the air conditioning apparatus 10. The air conditioning apparatus 10 includes an exhaust hole in a back side for expelling indoor air to the outdoor area and a suction hole in the back side for introducing outdoor air. In more detail, the installation case 17 is mounted on the back side of the air conditioning apparatus 10. The installation case 17 includes a suction hole 173 for sucking outdoor air and an exhaust hole 172 for expelling indoor air to the outdoor area. The suction hole 173 communicates with the outdoor air suction hole 148b of the grill 14, the exhaust hole 172 communicates with the exhaust grill 148 of the grill 14.

The shield member 23 is detachably attached to the discharge grill 141 of the grill 14.

In detail, the back side of the air conditioning apparatus 10 on which the installation case 17 is mounted is attached to a wall, where a supply duct and an exhaust duct are connected to the air conditioning apparatus 10. In some cases, one side of the air conditioning apparatus 10 can face with a wall. That is, the air conditioning apparatus 10 can be installed on a corner of a room. In this case, the right or left side of the discharge grill 141 faces or makes contact with the wall. Therefore, air cannot be efficiently discharged through the discharge grill 141 facing the wall. Further, air can flow back into the air conditioning apparatus 10 from the discharge grill 141 facing the wall, increasing flow resistance.

To solve these problems, the shield member 23 is attached to one side of the discharge grill 141 facing the wall. In this case, air guided by the air guide 144 is discharged through the discharge grill 141 except the portion shielded by the shield member 23. Therefore, air is not discharged through the portion, of the discharge grill 141 facing the wall, decreasing flow loss.

In detail, the shield member 23 includes hook ends 233 on both sides and/or a center portion for coupling with supporting ribs (not shown) of the discharge grill 141.

In more detail, the hook ends 233 formed on both ends of the shield member 23 are bent outwardly and hitched on the supporting ribs of the discharge grill 141 when the shield member 23 is attached to the discharge grill 141. The hook ends 233 formed on the center portion of the shield member 23, such that the shield member 23 can be more firmly attached to the discharge grill 141. The shield member 23 further includes shield ribs 231 on an inner surface and rib grooves 232 between the shield ribs 231. Therefore, when the shield member 23 is attached to the discharge grill 141, empty spaces formed between ribs of the discharge grill 141 can be shield by the shield ribs 231. Here, the ribs of the discharge grill 141 are inserted into the rib grooves 232 of the shield member 23.

Fig. 31 is a perspective view showing a first embodiment of the installation case of the air conditioning apparatus 10 according to the present invention.

Referring to Fig. 31, an installation case 17 of the current embodiment is characterized in that the installation case 17 is coupled to the air conditioning apparatus 10 when the air conditioning apparatus 10 is connected to a supply duct and an exhaust duct that are formed through a wall. The installation case 17 is mounted on the installation case receiving portion 169 formed in a side of the rear panel 16.

In detail, the installation case 17 includes bar receiving surfaces 171 on both top sides for receiving one ends of the installation bars 18, a wiring penetration hole 174 formed in an edge portion, and a suction hole 173 and an exhaust hole 172 formed through a front portion. The guide ribs 161 of the rear panel 16 are inserted into the suction hole 173 and the exhaust hole 172. Therefore, air flowing through the suction hole 163 and the exhaust hole 162 of the rear panel 16 can be prevented from escaping owing to the guide ribs 161.

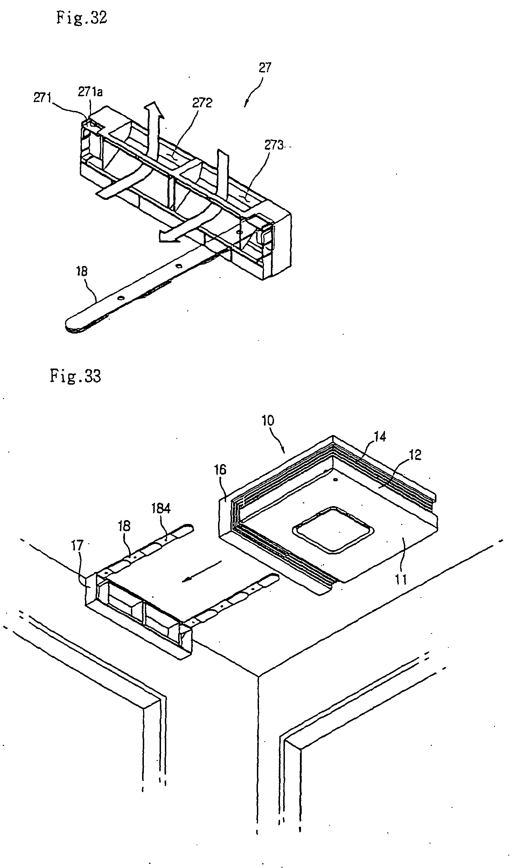

Fig. 32 is a perspective view showing a second embodiment of the installation case of the air conditioning apparatus 10 according to the present invention.

Referring to Fig. 31, an installation case 27 of the current embodiment is characterized in that the installation case 27 is coupled to the air conditioning apparatus 10 when the air conditioning apparatus 10 is connected to a supply duct and an exhaust duct that are formed through a ceiling.

In detail, the installation case 27 includes a suction hole 273 and an exhaust hole 272 that are formed from a front surface to a top surface, bar receiving surfaces 271 formed in both top sides for receiving the installation bars 18, and bar inserting holes 271a formed in rear ends of the bar receiving surfaces 271 and having a predetermined width.

In more detail, the bent end of the installation bar 18 is inserted into the bar inserting hole 271a. The suction hole 273 and the exhaust hole 272 of the installation case 27 are connected to the suction hole 163 and the exhaust hole 162 of the rear panel 16, respectively.

In this case, the guide ribs 16 of the rear panel 16 are fitted around the suction hole 273 and the exhaust hole 272, such that outdoor air supplied into the air conditioning apparatus 10 from the supply duct cannot escape to the outside while passing through the suction hole 273 of the installation case 27. Further, indoor air expelled from the air conditioning apparatus 10 to the exhaust duct cannot escape to the outside while passing through the exhaust hole 272 of the installation case 27.

Fig. 33 shows a first embodiment of installing the air conditioning apparatus 10 in a building according to the present invention.

Referring to Fig. 33, in this embodiment, a supply duct and an exhaust duct are formed in a wall of the building for connection with the air conditioning apparatus 10.

In detail, a duct member 30 includes a supply duct 31 (refer to Fig. 34) and an exhaust duct 32 (refer to Fig. 34). The duct member 30 is formed in the wall of the building. In this case, the installation bar 17 of Fig 31 having the suction hole 173 and the exhaust hole 172 in a front-to-back direction is used for installing the air conditioning apparatus 10 in the building. In detail, the installation case 17 and the installation bars 18 are coupled to each other and then attached to a ceiling while aligning the suction hole 173 and the exhaust hole 172 with the supply duct 31 and the exhaust duct 32. Next, fasteners are inserted into the ceiling through the coupling holes 184 of the installation bars 18 for securely fix the installation bars 18 and the installation case 17 to the ceiling. Then, the air conditioning apparatus 10 is pushed in the direction of arrow to coupling the installation bars 18 to the installation bar mounting structure of the rear panel. In this way, the air conditioning apparatus 10 can be mounted on the ceiling.

Fig. 34 is an exploded perspective view showing an air flow throughout the air conditioning apparatus 10 in ventilation mode.

Referring to Fig. 34, the suction hole 173 of the installation case 17 is connected to the supply duct 31, and the exhaust hole 172 of the installation case 17 is connected to the exhaust duct 32.

In detail, outdoor air is introduced into the air conditioning apparatus 10 from the supply duct 31 through the suction hole 163 of the rear panel 16. Here, the indoor air suction hole 111 of the front cover 11 can be opened to perform both the ventilation mode and cleaning mode, or closed to perform only the ventilation mode. For this, the suction panel 112 may be openably mounted on the front cover 11 as described above.

In more detail, outdoor air introduced through the suction hole 163 flows along the filter housing 147 of the grill 14 down to a lower end of the filter housing 147 and reaches the bottom of the filter 13. Then, the outdoor air passes through the filter 13 upwardly toward the fan 15. Here, since the pressure around the bottom of the filter 13 is lower than the atmospheric pressure due to the operation of the fan 15, the outdoor air introduced through the suction hole 163 flows down to the bottom of the filter 13. That is, since air flows from a high pressure area to a low pressure area, the outdoor air flows along the filter housing 147 down to the bottom of the filter 13.

Further, while passing through the filter 13 in an upward direction, the outdoor air are sequentially cleaned by the pre filter 131, the HEPA filter 132, and the deodorization filter 133. After passing through the deodorization filter 133, the outdoor air reaches fan 15 through the orifice 143. Since the fan 15 is a centrifugal fan that sucks air in an axial direction and blows the air in a radial direction, the outdoor air is horizontally blown by the fan 15. Then, the outdoor air is guided by the discharge guide 165 of the rear panel 16 and the air guide 144 of the grill toward the discharge grill 141. Finally, the outdoor air is discharged to an indoor area through the discharge grill 141.

While the outdoor air is introduced from the supply duct 31, polluted indoor air is expelled through the exhaust door 32.

In detail, a discharge fan can be installed in the exhaust duct 32 or on an end of the exhaust duct 32 to indoor air through the exhaust duct 32. Further, a heat recovery ventilator can be installed between the exhaust duct 32 and the supply duct 31 for heat exchange.

In more detail, when the pressure inside the exhaust duct 32 decreases by the operation of the discharge fan connected to the exhaust duct 32, indoor air is introduced into the exhaust duct 32 through the exhaust grill 148. As explained above, the exhaust grill 148 is formed on a side portion and a bottom portion of the air conditioning apparatus 10 for rapidly discharge polluted indoor air to an outdoor area. The indoor air sucked through the exhaust grill 148 does not flow to the suction hole 163 owing to the compartment wall 146 and the air guide 144 of the grill 14. The coupling rib 148a of the grill inserted into the sliding groove 124 of the cover guide 12 is closed at a portion facing the exhaust grill 148 and opened at a portion facing the suction hole 163. Therefore, the polluted indoor air is not introduced into the air conditioning apparatus 10 while it is discharged through the exhaust grill 148.

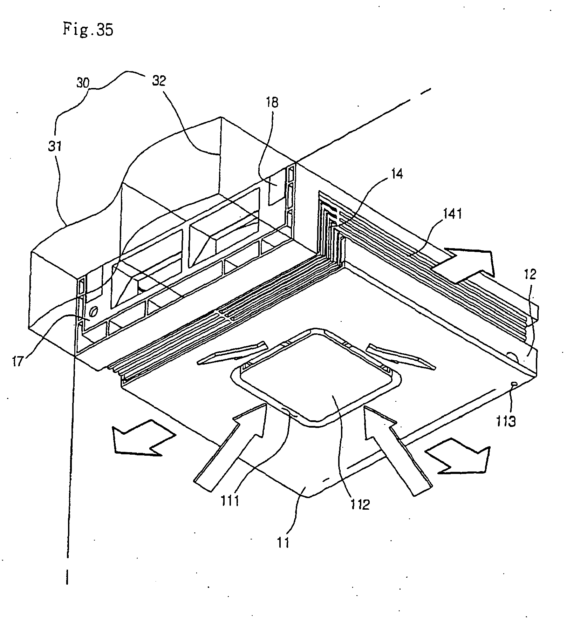

Fig. 35 is a bottom perspective view showing an air flow throughout the air conditioning apparatus 10 in cleaning mode.

Referring to Fig. 35, in cleaning mode, indoor air is sucked through the indoor air suction hole 111 and passes through the filter 13. While passing through the filter 13, the indoor air is cleaned. Then, the indoor air is discharged back to an indoor area through the discharge grill 141 of the grill 14.

Meanwhile, when the cleaning mode is selected, the suction hole 173 connected to the supply duct 31 can be closed.

In detail, although the fan 15 rotates in the cleaning mode, the indoor air is not sucked through the exhaust grill 148. Therefore, it is not required to screen the exhaust hole 172 using an additional part. However, since the suction hole 173 communicates with the filter 13, outdoor air can be introduced into the air conditioning apparatus 10 through the suction hole 173 when the indoor air is sucked through the indoor air suction hole 111.

Therefore, to perform only the cleaning mode by preventing outdoor air from flowing into the air conditioning apparatus 10 through the suction holes 163 and 173 connected to the supply duct 31 in the cleaning mode, an additional mechanism can be employed for selectively close the suction holes 163 and 173. In one embodiment, an opening/closing unit can be installed on a front side or a back side of the suction hole 173 of the installation case 17. A micro computer can be used to automatically operate the opening/closing unit according to a selected mode.

Alternatively, the opening/closing unit can be installed on a front side of a back side of the suction hole 163 of the rear panel 16. For example, a plate having a size larger than or equal to that of the suction hole 163 or 173 can be rotatably or slidable installed to selectively open and close the suction hole 163 or 173. Here, the opening/closing mechanism is not limited. Various opening/closing mechanisms can be used.

The air flow in the cleaning mode will now be more fully described. In cleaning mode, the fan 15 is operated to suck air from an indoor area through the indoor air suction hole 111. The sucked indoor air is cleaned while passing through the filter 13, and then reaches the fan 15 through the orifice 143. The indoor air is blown by the fan 15 in a radial direction and guided by the air guide 144 and the discharge guide 165 to the discharge grill 141 where the indoor air is discharged back to the indoor area.

As described above, both in the cleaning mode and the ventilation mode, air introduced into the air conditioning apparatus 10 passes through the filter 13. Therefore, clean air can be supplied to the indoor area. Further, the discharge grill 141 is formed in three directions of the air conditioning apparatus 10, so that air discharged from the air conditioning apparatus 10 into the indoor area can be circulated throughout the indoor area. In other words, if the discharge grill 141 is formed in a downward direction of the air conditioning apparatus 10, air discharged from the air conditioning apparatus 10 cannot be circulated throughout the indoor area. Furthermore, the exhaust grill 148 is formed on a side portion and a bottom portion of the air conditioning apparatus 10, so that polluted indoor air can be rapidly expelled to the outdoor area. In addition, the indoor air suction hole 111 is formed in the bottom of the air conditioning apparatus 10, and the discharge grill 141 is formed on the side portions of the air conditioning apparatus 10, so that air discharged from the discharge grill 141 is not directly sucked through the indoor air suction hole 111. Further, in cleaning mode, indoor air is sucked and discharged in multiple directions, so that the indoor air can be quickly cleaned. Furthermore, the air conditioning apparatus 10 can be operated in both ventilation and cleaning modes at the same time. On the contrarily, the air conditioning apparatus 10 can be operated either in ventilation mode or in cleaning mode by movably installing the suction panel 112.

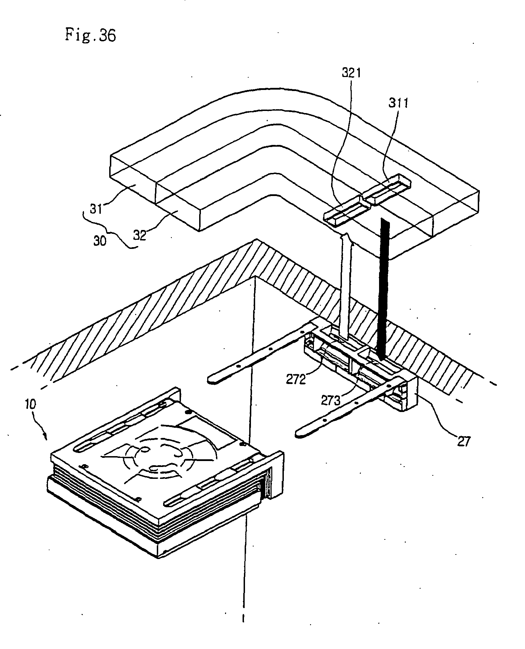

Fig. 36 shows a second embodiment of installing the air conditioning apparatus 10 in a building according to the present invention.

Referring to Fig. 36, the air conditioning apparatus 10 is connected to a duct member 30 formed in a ceiling.

In detail, the air conditioning apparatus 10 can be connected to the duct member 30 formed in the ceiling by using the installation case 27 of Fig. 32. The suction hole 273 of the installation case 27 is connected to a branch supply duct 311 formed on a bottom surface of a supply duct 31 of the duct member 30. The exhaust hole 272 of the installation case 17 is connected to a branch exhaust duct 321 formed on a bottom surface of an exhaust duct 32 of the duct member 30. Alternatively, the suction hole 273 and the exhaust hole 272 of the installation case 17 can be directly connected to one ends of the supply duct 31 and the exhaust duct 32, respectively. In detail, when a plurality of air conditioning apparatuses is connected to the duct member 30, the air conditioning apparatuses may be connected to the duct member 30 through branch ducts. On the contrary, when a single air conditioning apparatus is connected to the duct member 30, the air conditioning apparatus may be directly connected to an end of the duct member 30.

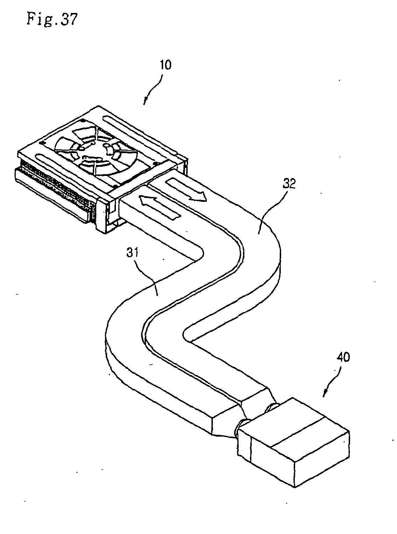

Fig. 37 shows the air conditioning apparatus 10 connected to a heat recovery ventilator 35 according to the present invention.

Referring to Fig. 37, the air conditioning apparatus 10 is connected to the heat recovery ventilator 35 through a duct member for heat exchange.

In detail, one ends of a supply duct 31 and an exhaust duct 32 of the duct member are connected to the air conditioning apparatus 10, and the other ends are connected to the heat recovery ventilator 35. In the heat recovery ventilator 35, outdoor air to the air conditioning apparatus 10 exchanges heat with indoor air from the air conditioning apparatus 10. Therefore, the temperature of an indoor area is not rapidly fluctuated by the outdoor air supplied to the indoor area. For example, when the indoor temperature is higher than the outdoor temperature, heat is transferred from the indoor air discharged from the air conditioning apparatus 10 to the outdoor air to decrease temperature difference between the indoor area and the outdoor air supplied to the indoor area, thereby preventing temperature fluctuation in the indoor area.

Meanwhile, the heat recovery ventilator 35 is not used in cleaning mode. Therefore, outdoor air is not introduced into the air conditioning apparatus 10 through the supply duct 31 when indoor air is taken into the air conditioning apparatus 10 through the indoor air suction hole 111 in the cleaning mode. As a result, an additional shield unit is not required to screen the out door air suction hole of the air conditioning apparatus 10 in the cleaning mode.

When the supply duct 31 and the exhaust duct 32 are formed in a wall, the installation case 17 having suction and exhaust holes in a side portion is used. Further, when the supply duct 31 and the exhaust duct 32 are formed in a ceiling, the installation duct 27 having suction and exhaust holes in a top portion is used. Therefore, the air conditioning apparatus 10 can be properly installed according to the structure of a building.

According to the air conditioning apparatus of the present invention, both ventilation and air-cleaning can be provided by a single device.

Further, the air conditioning apparatus can be mounted on a ceiling or a wall for effectively removing floating duct and preventing falling or damaging by children or babies.

Further, the air conditioning apparatus purifies air using a filter in ventilation mode as well as in cleaning mode, so that clean air can be supplied to an indoor area both in ventilation mode and cleaning mode.

Further, since the air conditioning apparatus provides both ventilation and air-cleaning, purchasing, installation, and operating costs required for ventilation and air-cleaning can be reduced.

Further, the air conditioning apparatus has an improved air flow channel such that air can be smoothly circulated under less flow resistance conditions.

As described above, since the air conditioning apparatus provides both the ventilation and air-cleaning and supplies clean air even in ventilation mode by cleaning supplied air using a filter, the air conditioning apparatus can be used in various fields.

It will be apparent to those skilled in the art that various modifications and variations can be made in the present invention. Thus, it is intended that the present invention covers the modifications and variations of this invention provided they come within the scope of the appended claims.

## Claims

1. An air conditioning apparatus comprising:
- a cover assembly (11. 112. 12) including an indoor air suction hole (111) through which indoor air is introduced in a cleaning mode;
- a filter assembly (13) cleaning indoor air sucked through the indoor air suction hole (111);
- a grill (14) including a discharge grill (141) formed on a side surface thereof for discharging the indoor air cleaned by the filter assembly (13) to an indoor area and an exhaust grill (148) through which indoor air is introduced in a ventilation mode for discharging the indoor air to an outdoor area;
- a fan assembly (15. 20) drawing indoor or outdoor air which passes through the filter assembly (13) toward the discharge grill (141);
- a control box (19) mounted at a predetermined position of the grill (14); and
- a rear panel (16) coupled to the grill (14), the rear panel (16) including a suction hole (163) formed in one side for introducing outdoor air and an exhaust hole (162) formed beside the suction hole (163) for discharging indoor air to the outdoor area.

2. The air conditioning apparatus according to claim 1, wherein the outdoor air is sucked through the suction hole (163) of the rear panel (16) in a ventilation mode and is discharged to the indoor area through the filter assembly (13) and the discharge grill (141).

3. The air conditioning apparatus according to claim 1, wherein the outdoor air is sucked through the suction hole (163) of the rear panel (16) in a ventilation mode and directed to a lower portion of the filter assembly (13) along a filter housing (147) formed on a lower portion of the grill (14).

4. The air conditioning apparatus according to claim 1. wherein the air passing through the filter assembly flows through an orifice (143) formed in a center portion of the discharge grill (141) and then discharged through the discharge grill (141).

5. The air conditioning apparatus according to claim 4, wherein the air passing through the orifice (143) is guided to the discharge grill (141) by an air guide (144) formed on an upper portion of the grill (14).

6. The air conditioning apparatus according to claim 1, wherein the indoor air suction hole (111) of the cover assembly is opened in a ventilation mode such that a cleaning mode is performed simultaneously in the ventilation mode.

7. The air conditioning apparatus according to claim 1, wherein the indoor air suction hole (111) of the cover assembly (11, 112, 12) is shielded in a ventilation mode.

8. The air conditioning apparatus according to claim 1, wherein the outdoor air and the indoor air that are respectively sucked through the suction hole (163) of the rear panel (16) and the indoor air suction hole (111) of the cover assembly (11, 112, 12) are cleaned while passing through the filter assembly (13) in a bottom-to-top direction.

9. The air conditioning apparatus according to claim 1, wherein the indoor air is sucked through the exhaust grill (148) in a ventilation mode and discharged to the outdoor area through an exhaust duct (32) connected to the exhaust hole (162) of the rear panel (16).

10. The air conditioning apparatus according to claim 1, wherein the indoor air is sucked through the indoor air suction hole (111) of the cover assembly (11, 112, 12) in a cleaning mode and discharged through the discharge grill (141) of the grill (14) in three directions after passing through the filter assembly (13).

11. The air conditioning apparatus according to claim 1, wherein the suction hole (163) is shielded in a cleaning mode.

12. The air conditioning apparatus according to claim 1, wherein the filter assembly comprises a pre filter (131) for removing dust particles having a relatively large size, a HEPA (high efficiency particulate air) filter (132) for removing fine dust particles, and a deodorization filter (133) removing odors, and
the grill (14) further includes a shroud (145) detachably coupled to a center portion thereof and having an orifice hole (143) for guiding the air from the filter assembly (13) to the discharge grill (141).

13. The air conditioning apparatus according to claim 1, further comprising:
- an installation bar (18) detachably coupled to a top surface of the rear panel (16); and
- an installation case (17, 27) coupled to a back side of the rear panel (16) and connected to a supply duct (31) or an exhaust duct (32).

14. The air conditioning apparatus according to claim 13, wherein the supply duct (31) or the exhaust duct (32) is connected to a heat recovery ventilator (40).

15. The air conditioning apparatus according to claim 1, further comprising a CO2 sensor or a VOC (volatile organic compounds) sensor detachably mounted on one side of an inner surface of the grill (14).

16. The air conditioning apparatus according to claim 1, further comprising a shield member (23) screening one side of the discharge grill (141) of the grill (14).

17. The air conditioning apparatus according to claim 1, further comprising a base panel (22) mounted on a top surface of the rear panel (16).

18. The air conditioning apparatus according to claim 1, wherein the fan assembly (15, 20) comprises:
- a centrifugal fan (15);
- a motor (20) rotating the centrifugal fan (15);
- a motor mount (201) supporting the motor (20); and
- a vibration damping member (202) connecting the motor mount (201) and the rear panel (16) and absorbing vibration of the motor (20).

19. The air conditioning apparatus according to claim 1, wherein the cover assembly (11, 112, 12) comprises:
- a front cover (11) formed with the indoor air suction hole (111):
- a suction panel (112) coupled to the front cover (11); and
- a cover guide (12) coupled to the grill (14) and including a lower portion to which the front cover (11) is coupled.

20. The air conditioning apparatus according to claim 13, wherein the installation bar (18) comprises:
- a bracket (181) bent in a predetermined portion with a predetermined length; and
- at least one bent tab (182) formed on a bottom surface of the bracket (181) and bent with a predetermined length; and
- a rib (183) formed on a inner center portion of the bent tab (182).

21. The air conditioning apparatus according to claim 20, wherein the rear panel (16) comprises:
- a bracket surface (166) for receiving the bracket (181);
- a bent tab hole (167) formed in the bracket surface for receiving the bent tab (182); and
- a rib (168) slit for receiving the rib (183) of the installation bar (18).

22. The air conditioning apparatus according to claim 20, wherein the bent end of the bracket (181) of the installation bar (18) is adhered to an outer surface of the installation case (17, 27) or inserted into the installation case (17, 27).

23. The air conditioning apparatus according to claim 13, wherein the installation case (17) comprises an air suction hole (173) communicating with the supply duct (31) and an air exhaust hole (172) communicating with the exhaust duct (32), and the air suction hole (173) and the air exhaust hole (172) penetrate the installation case (17) in a front-to-rear direction.

24. The air conditioning apparatus according to claim 13, wherein the installation case (27) comprises an air suction hole (273) communicating with the supply duct (31) and an air exhaust hole (272) communicating with the exhaust duct (32), and the air suction hole (273) and the air exhaust hole (272) penetrate from a front surface to a top surface of the installation case (27).

25. The air conditioning apparatus according to claim 1, further comprising
- a discharge guide (165) detachably mounted along an edge of a bottom surface of the rear panel (16) for guiding air discharge, wherein a wiring penetration hole (169a) is formed in one end of the rear panel (16).

26. The air conditioning apparatus according to claim 25, wherein the discharge guide (165) comprises a plurality of protruded stoppers (165a) formed on an edge, and the rear panel (16) further comprises a plurality of stopper recesses (165c) formed in an edge for receiving the protruded stoppers (165a).

27. The air conditioning apparatus according to claim 25, further comprising:
- a coupling boss (165b) formed on an edge of the discharge guide (165); and
- a corresponding coupling boss (160) formed on the bottom surface of the rear panel (16).

28. The air conditioning apparatus according to claim 25, wherein the rear panel (16) further includes guide ribs (161) extending from edges of the suction hole (163) and the exhaust hole (162).

29. The air conditioning apparatus according to claim 25, wherein the discharge guide (165) is slantingly mounted at predetermined angle on the edge of the bottom surface of the rear panel (16).

30. The air conditioning apparatus according to claim 18, wherein the end of the motor mount (201) is spaced a predetermined distance from the rear panel (16) by the vibration damping member (202).

31. The air conditioning apparatus according to claim 18, wherein the vibration damping member (202) comprises at least one groove formed in an outer surface and having a band-like shape.

32. The air conditioning apparatus according to claim 19, further comprising:
- a control panel (21) detachably coupled to one side of the cover guide (12); and
- a shield member (23) screening at least a part of the discharge grill (141).

33. The air conditioning apparatus according to claim 32, wherein the control panel (21) is positioned under the control box (19).

34. The air conditioning apparatus according to claim 32, wherein the control panel (21) comprises a display PCB (printed circuit board) substrate mounted on a rear surface.

35. The air conditioning apparatus according to claim 19, further comprising:
- a safe ring (128) connected to one side of an inner surface of the cover guide (12); and
- a safe ring connecting member (117) formed on a rear surface of the front cover (11) for coupling with the safe ring (128).

36. The air conditioning apparatus according to claim 19, further comprising:
- a filter replacement detecting sensor mounted on a rear surface of the cover guide (12); and
- a detection rib (118) formed on one side of a rear surface of the front cover (11) for selectively making contact with the filter replacement detecting sensor according to closing and opening of the front cover (11).

37. The air conditioning apparatus according to claim 36, wherein a controller of the air conditioning apparatus determines that a filter is replaced when the detection rib (118) is separated from the filter replacement detecting sensor and abutted on the filter replacement detecting sensor again.

38. The air conditioning apparatus according to claim 19, further comprising a handle groove (120) formed in an outer surface of the cover guide (12) to a predetermined depth.

39. The air conditioning apparatus according to claim 19, further comprising at least one reinforcement rib (125) that extends a predetermined length from an inner edge of the cover guide (12) and couples to the grill (14).

40. The air conditioning apparatus according to claim 19, further comprising:
- a coupling hook (126) protruded from an inner surface of the cover guide (12); and
- a coupling tab (142) protruded from an edge of the grill (14) for coupling with the coupling hook (126).

41. The air conditioning apparatus according to claim 19, further comprising:
- at least one coupling hook (114) protruded from an edge of the front cover (11); and
- a coupling hole (122) formed in the cover guide (12) for receiving the coupling hook (114).

42. The air conditioning apparatus according to claim 19, further comprising:
- a pair of hinges (115) protruded from corners of a rear surface of the front cover (11); and
- hinge holes (122) formed in an end of the cover guide (12) for receiving the pair of hinges (115).

43. The air conditioning apparatus according to claim 32, wherein the shield member (23) is detachably mounted on the discharge grill (141).

44. The air conditioning apparatus according to claim 32, further comprising hook ends (233) extending from each side and/or a center portion of the shield member (23).

45. The air conditioning apparatus according to claim 1, further comprising:
- a filter housing (147) formed on a bottom surface of the grill (14), the filter housing (147) accommodating the filter assembly (13); and
- an air guide (144) formed on an upper portion of the grill (14).

46. The air conditioning apparatus according to claim 1, wherein the discharge grill (141) comprises a portion that is bent downwardly and divided into two parts by a compartment wall (146).

47. The air conditioning apparatus according to claim 46, wherein one of the two parts is a region of an outdoor air introducing hole (148b), and the other of the two parts is a region of an exhaust grill (148) for expelling indoor air.

48. The air conditioning apparatus according to claim 45, wherein the filter housing (147) comprises at least one filter holding rib (147a) formed on a lower edge for preventing the filter from being undesirably removed.

49. The air conditioning apparatus according to claim 45, further comprising an air pollution sensor mounted on an outer surface of the filter housing (147).

50. The air conditioning apparatus according to claim 45, further comprising:
- a sensor mounting rib (147b) formed on an outer surface of the filter housing (147) for mounting the air pollution sensor; and
- a sensor fixing hook (147c) extending from the filter housing (147) for fixing the air pollution sensor.

51. The air conditioning apparatus according to claim 1, further comprising a shroud(145) detachably mounted on a center portion of the grill (14).

52. The air conditioning apparatus according to claim 51, wherein the shroud (145) comprises at least one coupling boss (145c) formed on a bottom surface and having a predetermined length, and a coupling rib (145b) extending from a top surface and bent at a predetermined angle, and
the grill comprises a shroud coupling hole (140a) through which a fastener passes for coupling with the coupling boss (145b) of the shroud (145) therethrough, and a rib hole (140b) for receiving the coupling rib (145b) of the shroud (145).

53. The air conditioning apparatus according to claim 45, wherein the grill (14) comprises an orifice (143) formed in a center portion and having a predetermined diameter, the orifice (143) being formed such that a width between one end of the air guide (144) and the orifice is different from a width between the other end of the air guide (144) and the orifice (143).

54. The air conditioning apparatus according to claim 1,
wherein the control box (19) includes a housing (191) and and a cover (192) to protect electrical components,
the grill further comprises a coupling boss (149a) and coupling rib (149b) formed on an edge,
wherein the housing (191) is mounted on a bottom surface of the grill (14) by the coupling boss (149a) and the coupling rib (149b).

55. The air conditioning apparatus according to claim 54, wherein the coupling rib (149b) is bent into a "┌" shape, and an insert rib (196) is formed on an outer surface of the housing for coupling with the coupling rib (149b) by sliding.

56. The air conditioning apparatus according to claim 54, further comprising a fixing rib (193) extending from an outer surface of the housing (191) and coupled to the coupling boss (149a) of the grill (14) by a fastening member.

57. The air conditioning apparatus according to claim 54, further comprising:
- a coupling hook (195) protruded from an outer surface of the housing (191) in an upward direction; and
- a coupling rib (198) protruded from a lower side of an outer surface of the cover (192) for coupling with the coupling hook (195) by sliding.

58. The air conditioning apparatus according to claim 57, further comprising a guide rib (197) formed on the housing (191) and located a predetermined distance away from the coupling hook (195), the guide rib (197) extending a predetermined length in a horizontal direction for guiding movement of the coupling rib (198).

59. The air conditioning apparatus according to claim 54, further comprising a metal plate covering the housing (191) and/or the cover (192).

## Patentansprüche

1. Klimaanlagenvorrichtung, die umfasst:
- eine Abdeckungsanordnung (11, 112, 12), die ein Innenraumluft-Ansaugloch (111) enthält, durch das in einem Reinigungsmodus Innenraumluft eingeleitet wird;
- eine Filteranordnung (13), die Innenraumluft reinigt, die durch das Innenraum-Luftansaugloch (111) angeordnet wird;
- ein Gitter (14), das ein Ausströmgitter (141), das an einer Seitenoberfläche hiervon ausgebildet ist, um Innenraumluft, die durch die Filteranordnung (13) gereinigt ist, in einen Innenraumbereich ausströmen zu lassen, und ein Entleerungsgitter (148), durch das in einem Entlüftungsmodus Innenraumluft eingeleitet wird, um die Innenraumluft in einen Außenraumbereich ausströmen zu lassen, enthält;
- eine Gebläseanordnung (15, 20), die Innenraum- oder Außenraumluft, die sich durch die Filteranordnung (13) bewegt, zum Ausströmgitter (141) saugt;
- einen Steuerkasten (19), der an einer vorgegebenen Position des Gitters (14) angebracht ist; und
- eine hintere Platte (16), die mit dem Gitter (14) gekoppelt ist, wobei die hintere Platte (16) ein Ansaugloch (163), das in einer Seite ausgebildet ist, um Außenraumluft einzuleiten, und ein Entleerungsloch (162), das neben dem Ansaugloch (163) ausgebildet ist, um Innenraumluft in den Außenraumbereich ausströmen zu lassen, enthält.

2. Klimaanlagenvorrichtung nach Anspruch 1, wobei in einem Entlüftungsmodus die Außenraumluft durch das Ansaugloch (163) der hinteren Platte (16) angesaugt wird und durch die Filteranordnung (13) und das Ausströmgitter (141) in den Innenraumbereich ausgestoßen wird.

3. Klimaanlagenvorrichtung nach Anspruch 1, wobei in einem Entlüftungsmodus die Außenraumluft durch das Ansaugloch (163) der hinteren Platte (16) angesaugt wird und längs eines in einem unteren Abschnitt des Gitters (14) ausgebildeten Filtergehäuses (147) zu einem unteren Abschnitt der Filteranordnung (13) geleitet wird.

4. Kümaanlagenvorrichtung nach Anspruch 1, wobei die Luft, die sich durch die Filteranordnung bewegt, durch eine in einem Mittelabschnitt des Ausströmgitters (141) ausgebildete Öffnung (143) strömt und dann durch das Ausströmgitter (141) ausströmt.

5. Klimaanlagenvorrichtung nach Anspruch 4, wobei die Luft, die sich durch die Öffnung (143) bewegt, durch eine an einem oberen Abschnitt des Gitters (14) ausgebildete Luftführung (144) zu dem Ausströmgitter (141) geführt wird.

6. Klimaanlagenvorrichtung nach Anspruch 1, wobei in einem Entlüftungsmodus das Innenraumluft-Ansaugloch (111) der Abdeckungsanordnung geöffnet ist, derart, dass gleichzeitig zu dem Entlüftungsmodus ein Reinigungsmodus ausgeführt wird.

7. Klimaanlagenvorrichtung nach Anspruch 1, wobei in einem Entlüftungsmodus das Innenraumluft-Ansaugloch (111) der Abdeckungsanordnung (11, 112, 12) abgeschirmt ist.

8. Klimaanlagenvorrichtung nach Anspruch 1, wobei die Außenraumluft und die Innenraumluft, die durch das Ansaugloch (163) der hinteren Platte (16) bzw. durch das Innenraumluft-Ansaugloch (111) der Abdeckungsanordnung (11, 112, 12) angesaugt werden, gereinigt werden, während sie sich in einer Richtung von unten nach oben durch die Filteranordnung (13) bewegen.

9. Klimaanlagenvorrichtung nach Anspruch 1, wobei in einem Entlüftungsmodus die Innenraumluft durch das Entleerungsgitter (148) angesaugt wird und durch eine Auslassrohrleitung (32), die mit dem Entleerungsloch (162) der hinteren Platte (16) verbunden ist, in den Außenraumbereich ausströmt.

10. Klimaanlagenvorrichtung nach Anspruch 1, wobei in einem Reinigungsmodus die Innenraumluft durch das Innenraumluft-Ansaugloch (111) der Abdeckungsanordnung (11, 112, 12) angesaugt wird und durch das Ausströmgitter (141) des Gitters (14) in drei Richtungen ausgestoßen wird, nachdem sie sich durch die Filteranordnung (13) bewegt hat.

11. Klimaanlagenvorrichtung nach Anspruch 1, wobei das Ansaugloch (163) in einem Reinigungsmodus abgeschirmt ist.

12. Klimaanlagenvorrichtung nach Anspruch 1, wobei die Filteranordnung einen Vorfilter (131), um Staubpartikel mit verhältnismäßig großer Abmessung zu entfernen, einen HEPA-Filter (Schwebstofffilter) (132), um feine Staubpartikel zu entfernen, und einen Desodorierungsfilter (133), um Gerüche zu entfernen, umfasst, und
das Gitter (14) ferner ein Ablenkelement (145) aufweist, das mit einem Mittelabschnitt hiervon lösbar gekoppelt ist und ein Mündungsloch (143) besitzt, um die Luft von der Filteranordnung (13) zu dem Ausströmgitter (141) zu führen.

13. Klimaanlagenvorrichtung nach Anspruch 1, die ferner umfasst:
- einen Installationsstab (18), der mit einer oberen Oberfläche der hinteren Platte (16) lösbar gekoppelt ist; und
- ein Installationsgehäuse (17, 27), das mit einer Rückseite der hinteren Platte (16) gekoppelt ist und mit einer Zufuhrrohrleitung (31) oder einer Entleerungsrohrleitung (32) verbunden ist.

14. Klimaanlagenvorrichtung nach Anspruch 13, wobei die Zufuhrrohrleitung (31) oder die Entleerungsrohrleitung (32) mit einem Wärmerückgewinnungs-Ventilator (40) verbunden ist.

15. Klimaanlagenvorrichtung nach Anspruch 1, die ferner einen CO₂-Sensor oder einen VOC-Sensor (Sensor für flüchtige organische Verbindungen) umfasst, der an einer Seite einer inneren Oberfläche des Gitters (14) lösbar angebracht ist.

16. Klimaanlagenvorrichtung nach Anspruch 1, die ferner ein Abschirmelement (23) umfasst, das eine Seite des Ausströmgitters (141) des Gitters (14) abschirmt.

17. Klimaanlagenvorrichtung nach Anspruch 1, die ferner eine Grundplatte (22) umfasst, die an einer oberen Oberfläche der hinteren Platte (16) angebracht ist.

18. Klimaanlagenvorrichtung nach Anspruch 1, wobei die Gebläseanordnung (15, 20) umfasst:
- ein Zentrifugalgebläse (15);
- einen Motor (20), der das Zentrifugalgebläse (15) dreht;
- eine Motoranbringung (201), die den Motor (20) unterstützt; und
- ein Schwingungsdämpfungselement (202), das die Motoranbringung (201) und die hintere Platte (16) miteinander verbindet und Schwingungen des Motors (20) absorbiert.

19. Klimaanlagenvorrichtung nach Anspruch 1, wobei die Abdeckungsanordnung (11, 112, 12) umfasst:
- eine vordere Abdeckung (11), die mit dem Innenraumluft-Ansaugloch (111) ausgebildet ist;
- eine Ansaugplatte (112), die mit der vorderen Abdeckung (11) gekoppelt ist; und
- eine Abdeckungsführung (12), die mit dem Gitter (14) gekoppelt ist und einen unteren Abschnitt aufweist, mit dem die vordere Abdeckung (11) gekoppelt ist.

20. Klimaanlagenvorrichtung nach Anspruch 13, wobei der Installationsstab (18) umfasst:
- einen Träger (181), der in einem vorgegebenen Abschnitt mit einer vorgegebenen Länge gebogen ist; und
- wenigstens eine gebogene Lasche (182), die an einer unteren Oberfläche des Trägers (181) ausgebildet ist und mit einer vorgegebenen Länge gebogen ist; und
- eine Rippe (183), die an einem inneren Mittelabschnitt der gebogenen Lasche (182) ausgebildet ist.

21. Klimaanlagenvorrichtung nach Anspruch 20, wobei die hintere Platte (18) umfasst:
- eine Trägeroberfläche (166), die den Träger (181) aufnimmt;
- ein Loch (187) für die gebogene Lasche, das in der Trägeroberfläche ausgebildet ist, um die gebogene Lasche (182) aufzunehmen; und
- einen Rippenschlitz (168), um die Rippe (183) des Installationsstabs (18) aufzunehmen.

22. Klimaanlagenvorrichtung nach Anspruch 20, wobei das gebogene Ende des Trägers (181) des Installationsstabs (18) an eine äußere Oberfläche des Installationsgehäuses (17, 27) geklebt ist oder in das Installationsgehäuse (17, 27) eingeführt ist.

23. Klimaanlagenvorrichtung nach Anspruch 13, wobei das Installationsgehäuse (17) ein Luftansaugloch (173) umfasst, das mit dem Zufuhrrohr (31) kommuniziert, und ein Luftentleerungsloch (172) umfasst, das mit dem Auslassrohr (32) kommuniziert, wobei das Luftansaugloch (173) und das Luftentleerungsloch (172) in das Installationsgehäuse (17) in einer Richtung von vorn nach hinten eindringen.

24. Klimaanlagenvorrichtung nach Anspruch 13, wobei das Installationsgehäuse (27) ein Luftansaugloch (273) umfasst, das mit der Zufuhrrohrleitung (31) kommuniziert, und ein Luftentleerungsloch (272) umfasst, das mit der Entleerungsrohrleitung (32) kommuniziert, und das Luftansaugloch (273) und das Luftentleerungsloch (272) von der vorderen Oberfläche in eine obere Oberfläche des Installationsgehäuses (27) eindringen.

25. Klimaanlagenvorrichtung nach Anspruch 1, die ferner umfasst:
- eine Ausströmführung (165), die längs einer Kante einer unteren Oberfläche der hinteren Platte (16) lösbar angebracht ist, um ausströmende Luft zu führen, wobei in einem Ende der hinteren Platte (16) ein Verdrahtungseindringloch (169a) ausgebildet ist.

26. Klimaanlagenvorrichtung nach Anspruch 25, wobei die Ausströmführung (165) mehrere vorstehende Anschläge (165a) aufweist, die an einer Kante ausgebildet sind, und die hintere Platte (16) ferner mehrere Anschlagaussparungen (165c) umfasst, die in einer Kante ausgebildet sind, um die vorstehenden Anschläge (165a) aufzunehmen.

27. Klimaanlagenvorrichtung nach Anspruch 25, die ferner umfasst:
- einen Kopplungsvorsprung (165b), der an einer Kante der Ausströmführung (165) ausgebildet ist; und
- einen entsprechenden Kopplungsvorsprung (160), der an der unteren Oberfläche der hinteren Platte (16) ausgebildet ist.

28. Klimaanlagenvorrichtung nach Anspruch 25, wobei die hintere Platte (16) ferner Führungsrippen (161) aufweist, die sich von Kanten des Ansauglochs (163) und des Entleerungslochs (162) erstrecken.

29. Klimaanlagenvorrichtung nach Anspruch 25, wobei die Ausströmführung (165) unter einem vorgegebenen Winkel an der Kante der unteren Oberfläche der hinteren Platte (16) schräg angebracht ist.

30. Klimaanlagenvorrichtung nach Anspruch 18, wobei das Ende der Motoranbringung (201) um eine vorgegebene Strecke von der hinteren Platte (16) durch das Schwingungsdämpfungselement (202) beabstandet ist.

31. Klimaanlagenvorrichtung nach Anspruch 18, wobei das Schwingungsdämpfungselement (202) wenigstens eine Nut aufweist, die in einer äußeren Oberfläche ausgebildet ist und eine bandartige Form hat.

32. Klimaanlagenvorrichtung nach Anspruch 19, die ferner umfasst:
- eine Steuerkonsole (21), die mit einer Seite der Abdeckungsführung (12) lösbar gekoppelt ist; und
- ein Abschirmelement (23), das wenigstens einen Teil des Ausströmgitters (141) abschirmt.

33. Klimaanlagenvorrichtung nach Anspruch 32, wobei die Steuerkonsole (21) unter dem Steuerkasten (19) angeordnet ist.

34. Klimaanlagenvorrichtung nach Anspruch 32, wobei die Steuerkonsole (21) ein Anzeige-PCB-Substrat (Substrat für die gedruckte Leiterplatte einer Anzeige), das auf einer hinteren Oberfläche angebracht ist, umfasst.

35. Klimaanlagenvorrichtung nach Anspruch 19, die ferner umfasst:
- einen Sicherheitsring (128), der mit einer Seite einer inneren Oberfläche der Abdeckungsführung (12) verbunden ist; und
- ein Sicherheitsring-Verbindungselement (117), das an einer hinteren Oberfläche der vorderen Abdeckung (11) ausgebildet ist, um mit dem Sicherheitsring (128) zu koppeln.

36. Klimaanlagenvorrichtung nach Anspruch 19, die ferner umfasst:
- einen Filteraustausch-Erfassungssensor, der an einer hinteren Oberfläche der Abdeckungsführung (12) angebracht ist; und
- eine Erfassungsrippe (118), die an einer Seite einer hinteren Oberfläche der vorderen Abdeckung (11) ausgebildet ist, um wahlweise entsprechend einem Schließen oder Öffnen der vorderen Abdeckung (11) einen Kontakt mit dem Filteraustausch-Erfassungssensor herzustellen.

37. Klimaanlagenvorrichtung nach Anspruch 36, wobei eine Steuereinheit der Klimaanlagenvorrichtung bestimmt, dass ein Filter auszutauschen ist, wenn die Erfassungsrippe (118) von dem Filteraustausch-Erfassungssensor getrennt wird und wieder an den Filteraustausch-Erfassungssensor anschlägt.

38. Klimaanlagenvorrichtung nach Anspruch 19, die ferner eine Griffnut (120) umfasst, die in einer äußeren Oberfläche der Abdeckungsführung (12) mit einer vorgegebenen Tiefe ausgebildet ist.

39. Klimaanlagenvorrichtung nach Anspruch 19, die ferner wenigstens eine Verstärkungsrippe (125) umfasst, die sich von einer inneren Kante der Abdeckungsführung (12) über eine vorgegebene Länge erstreckt und mit dem Gitter (14) gekoppelt ist.

40. Klimaanlagenvorrichtung nach Anspruch 19, die ferner umfasst:
- einen Kopplungshaken (126), der von einer inneren Oberfläche der Abdeckungsführung (12) vorsteht; und
- eine Kopplungslasche (142), die von einer Kante des Gitters (14) vorsteht, um mit dem Kopplungshaken (126) zu koppeln.

41. Klimaanlagenvorrichtung nach Anspruch 19, die ferner umfasst:
- wenigstens einen Kopplungshaken (114), der von einer Kante der vorderen Abdeckung (11) vorsteht; und
- ein Kopplungsloch (122), das in der Abdeckungsführung (12) ausgebildet ist, um den Kopplungshaken (114) aufzunehmen.

42. Klimaanlagenvorrichtung nach Anspruch 19, die ferner umfasst:
- ein Paar Scharniere (115), die von Ecken einer hinteren Oberfläche der vorderen Abdeckung (11) vorstehen; und
- Scharnierlöcher (122), die in einem Ende der Abdeckungsführung (12) ausgebildet sind, um das Paar Scharniere (115) aufzunehmen.

43. Klimaanlagenvorrichtung nach Anspruch 32, wobei das Abschirmelement (23) an dem Ausströmgitter (141) lösbar angebracht ist.

44. Klimaanlagenvorrichtung nach Anspruch 32, die ferner Hakenenden (233) umfasst, die sich von jeder Seite und/oder einem Mittelabschnitt des Abschirmelements (23) erstrecken.

45. Klimaanlagenvorrichtung nach Anspruch 1, die ferner umfasst:
- ein Filtergehäuse (147), das an einer unteren Oberfläche des Gitters (14) ausgebildet ist, wobei das Filtergehäuse (147) die Filteranordnung (13) aufnimmt; und
- eine Luftführung (144), die an einem oberen Abschnitt des Gitters (14) ausgebildet ist.

46. Klimaanlagenvorrichtung nach Anspruch 1, wobei das Ausströmgitter (141) einen Abschnitt aufweist, der nach unten gebogen ist und durch eine Fachwand (146) in zwei Teile unterteilt ist.

47. Klimaanlagenvorrichtung nach Anspruch 46, wobei einer der zwei Teile ein Bereich eines Außenraumluft-Einleitungslochs (148b) ist und der andere der beiden Teile ein Bereich eines Entleerungsgitters (148) zum Ausströmenlassen von Innenraumluft ist.

48. Klimaanlagenvorrichtung nach Anspruch 45, wobei das Filtergehäuse (147) wenigstens eine Filterhalterippe (147a) aufweist, die an einer unteren Kante ausgebildet ist, um zu verhindern, dass der Filter ungewollt entfernt wird.

49. Klimaanlagenvorrichtung nach Anspruch 45, die ferner einen Luftverschmutzungssensor umfasst, der an einer äußeren Oberfläche des Filtergehäuses (147) angebracht ist.

50. Klimaanlagenvorrichtung nach Anspruch 45, die ferner umfasst:
- eine Sensoranbringungsrippe (147b), die an einer äußeren Oberfläche des Filtergehäuses (147) ausgebildet ist, um den Luftverschmutzungssensor anzubringen; und
- einen Sensorbefestigungshaken (147c), der sich von dem Filtergehäuse (147) erstreckt, um den Luftverschmutzungssensor zu befestigen.

51. Klimaanlagenvorrichtung nach Anspruch 1, die ferner ein Abschirmblech (145) umfasst, das an einem Mittelabschnitt des Gitters (14) lösbar angebracht ist.

52. Klimaanlagenvorrichtung nach Anspruch 51, wobei das Abschirmblech (145) wenigstens einen Kopplungsvorsprung (145c) aufweist, der an einer unteren Oberfläche ausgebildet ist und eine vorgegebene Länge besitzt, und eine Kopplungsrippe (145b) aufweist, die sich von einer oberen Oberfläche erstreckt und unter einem vorgegebenen Winkel gebogen ist; und
das Gitter ein Abschirmblech-Kopplungsloch (140a) aufweist, durch das sich eine Befestigung erstreckt, um mit dem Kopplungsvorsprung (145b) des Abschirmblechs (145) zu koppeln, und ein Rippenloch (140b) aufweist, um die Kopplungsrippe (145b) des Abschirmblechs (145) aufzunehmen.

53. Klimaanlagenvorrichtung nach Anspruch 45, wobei das Gitter (14) eine Öffnung (143) aufweist, die in einem Mittelabschnitt ausgebildet ist und einen vorgegebenen Durchmesser besitzt, wobei die Öffnung (143) in der Weise ausgebildet ist, dass eine Weite zwischen einem Ende der Luftführung (144) und der Öffnung von einer Weite zwischen dem anderen Ende der Luftführung (144) und der Öffnung (143) verschieden ist.

54. Klimaanlagenvorrichtung nach Anspruch 1,
wobei der Steuerkasten (19) ein Gehäuse (191) und eine Abdeckung (192) aufweist, um elektrische Komponenten zu schützen,
das Gitter ferner einen Kopplungsvorsprung (149a) und eine Kopplungsrippe (149b), die an einer Kante ausgebildet sind, aufweist,
wobei das Gehäuse (191) durch den Kopplungsvorsprung (149a) und die Kopplungsrippe (149b) an einer unteren Oberfläche des Gitters (54) angebracht ist.

55. Klimaanlagenvorrichtung nach Anspruch 54, wobei die Kopplungsrippe (149b) in eine "Γ"-Form gebogen ist und an einer äußeren Oberfläche des Gehäuses eine Einsteckrippe (196) ausgebildet ist, um durch Gleiten mit der Kopplungsrippe (149b) zu koppeln.

56. Klimaanlagenvorrichtung nach Anspruch 54, die ferner eine Befestigungsrippe (193) aufweist, die sich von einer äußeren Oberfläche des Gehäuses (191) erstreckt und mit dem Kopplungsvorsprung (149a) des Gitters (14) durch ein Befestigungselement gekoppelt ist.

57. Klimaanlagenvorrichtung nach Anspruch 54, die ferner umfasst:
- einen Kopplungshaken (195), der von einer äußeren Oberfläche des Gehäuses (191) in einer Aufwärtsrichtung vorsteht; und
- eine Kopplungsrippe (198), die von einer unteren Seite einer äußeren Seite der Abdeckung (192) vorsteht, um durch Gleiten mit dem Kopplungshaken (195) zu koppeln.

58. Klimaanlagenvorrichtung nach Anspruch 57, die ferner eine Führungsrippe (197) aufweist, die an dem Gehäuse (191) ausgebildet ist und sich in einem vorgegebenen Abstand von dem Kopplungshaken (195) befindet, wobei sich die Führungsrippe (197) in horizontaler Richtung über eine vorgegebene Länge erstreckt, um die Bewegung der Kopplungsrippe (198) zu führen.

59. Klimaanlagenvorrichtung nach Anspruch 54, die ferner eine Metallplatte aufweist, die das Gehäuse (191) und/oder die Abdeckung (192) abdeckt.

## Revendications

1. Dispositif de conditionnement d'air, comprenant :
- un ensemble de couvercle (11, 112, 12) incluant un trou (111) d'aspiration d'air intérieur, par lequel de l'air intérieur est introduit lorsqu'on se trouve dans un mode de nettoyage ;
- un ensemble de filtre (13) filtrant l'air intérieur aspiré par le trou (111) d'aspiration d'air intérieur ;
- une grille (14) incluant une grille de décharge (141) formée sur une surface latérale de celle-ci pour décharger l'air intérieur nettoyé par l'ensemble de filtre (13) vers une zone intérieure et une grille d'échappement (148) par laquelle de l'air intérieur est introduit dans un mode de ventilation pour décharger l'air intérieur vers une zone extérieure ;
- un ensemble de ventilateur (15, 20) aspirant l'air intérieur ou extérieur qui passe par l'ensemble de filtre (13) vers la grille de décharge (141) ;
- un boîtier de commande (19) monté en une position prédéterminée de la grille (14) ; et
- un panneau arrière (16) couplé à la grille (14), le panneau arrière (16) comprenant un trou d'aspiration (163) formé dans un côté pour introduire de l'air extérieur et un trou d'échappement (162) formé à côté du trou d'aspiration (163) pour décharger de l'air intérieur vers la zone extérieure.

2. Dispositif de conditionnement d'air selon la revendication 1, dans lequel l'air extérieur est aspiré par le trou d'aspiration (163) du panneau arrière (16) dans un mode de ventilation et déchargé vers la zone intérieure en passant par l'ensemble de filtre (13) et la grille de décharge (141).

3. Dispositif de conditionnement d'air selon la revendication 1, dans lequel l'air extérieur est aspiré par le trou d'aspiration (163) du panneau arrière (16), dans un mode de ventilation et dirigé vers une partie inférieure de l'ensemble de filtre (13) le long d'un boîtier de filtre (147) formé sur une partie inférieure de la grille (14).

4. Dispositif de conditionnement d'air selon la revendication 1, dans lequel l'air passant par l'ensemble de filtre s'écoule à travers un orifice (143) formé dans une partie centrale de la grille de décharge (141) et est ensuite déchargé par la grille de décharge (141).

5. Dispositif de conditionnement d'air selon la revendication 4, dans lequel l'air passant par l'orifice (143) est guidé vers la grille de décharge (141) par un guide d'air (144) formé sur une partie supérieure de la grille (14).

6. Dispositif de conditionnement d'air selon la revendication 1, dans lequel le trou (111) d'aspiration d'air intérieur de l'ensemble de couvercle est ouvert dans un mode de ventilation de manière à ce qu'un mode de filtration soit accompli simultanément dans le mode de ventilation.

7. Dispositif de conditionnement d'air selon la revendication 1, dans lequel le trou (111) d'aspiration d'air intérieur de l'ensemble de couvercle (11, 112, 12) est occulté dans un mode de ventilation.

8. Dispositif de conditionnement d'air selon la revendication 1, dans lequel l'air extérieur et l'air intérieur, qui sont respectivement aspirés par le trou d'aspiration (163) du panneau arrière (16) et le trou (111) d'aspiration d'air intérieur de l'ensemble de couvercle (11, 112, 12), sont nettoyés tout en passant par l'ensemble de filtre (13) dans un sens de passage du bas vers le haut.

9. Dispositif de conditionnement d'air selon la revendication 1, dans lequel l'air intérieur est aspiré par la grille d'échappement (148) dans un mode de ventilation et déchargé vers la zone extérieure par l'intermédiaire d'un conduit d'échappement (32) connecté au trou d'échappement (162) du panneau arrière (16).

10. Dispositif de conditionnement d'air selon la revendication 1, dans lequel l'air intérieur et aspiré par le trou (111) d'aspiration d'air intérieur de l'ensemble de couvercle (11, 112, 12) dans un mode de nettoyage et déchargé par la grille de décharge (141) de la grille (14) dans trois directions après passage par l'ensemble de filtre (13).

11. Dispositif de conditionnement d'air selon la revendication 1, dans lequel le trou d'aspiration (163) est occulté dans un mode de nettoyage.

12. Dispositif de conditionnement d'air selon la revendication 1, dans lequel l'ensemble de filtre comprend un préfiltre (131) pour éliminer les particules de poussière ayant une taille relativement grande, un filtre HEPA (filtre haute efficacité pour les particules de l'air, *High Efficiency Particulate Air* en anglais) (132) pour éliminer les particules de poussière et un filtre de désodorisation (133) supprimant les odeurs, et
la grille (14) comprend en outre un flasque (145) couplé de façon détachable à une partie centrale de celui-ci et ayant un trou d'orifice (143) pour guider l'air venant de l'ensemble de filtre (13) vers la grille de décharge (141).

13. Dispositif de conditionnement d'air selon la revendication 1, comprenant en outre :
- une barre d'installation (18), couplée de façon détachable à une surface supérieure du panneau arrière (16) ; et
- un boîtier d'installation (17, 27) couplé au côté arrière du panneau arrière (16) et relié à un conduit d'alimentation (31) ou à un conduit d'échappement (32).

14. Dispositif de conditionnement d'air selon la revendication 13, dans lequel le conduit d'alimentation (31) ou le conduit d'échappement (32) est relié à un ventilateur (40) de récupération de chaleur.

15. Dispositif de conditionnement d'air selon la revendication 1, comprenant en outre un capteur de CO2 ou un capteur de COV (composés organiques volatils) monté de façon détachable sur un côté d'une surface intérieure de la grille (14).

16. Dispositif de conditionnement d'air selon la revendication 1, comprenant en outre un organe d'occultation (23) occultant un côté de la grille de décharge (141) de la grille (14).

17. Dispositif de conditionnement d'air selon la revendication 1, comprenant en outre un panneau de base (22) monté sur une surface supérieure du panneau arrière (16).

18. Dispositif de conditionnement d'air selon la revendication 1, dans lequel l'ensemble de ventilateur (15, 20) comprend :
- un ventilateur centrifuge (15) ;
- un moteur (20) entraînant en rotation le ventilateur centrifuge (15) ;
- une monture (201) de moteur supportant le moteur (20) ; et
- un organe (202) d'amortissement des vibrations reliant la monture (201) de moteur et le panneau arrière (16) et absorbant les vibrations du moteur (20).

19. Dispositif de conditionnement d'air selon la revendication 1, dans lequel l'ensemble de couvercle (11, 112, 12) comprend :
- un couvercle avant (11) formé avec le trou (111) d'aspiration d'air intérieur ;
- un panneau d'aspiration (112) couplé au couvercle avant (11) ; et
- un guide (12) de couvercle couplé à la grille (14) et comprenant une partie inférieure à laquelle le couvercle avant (11) est couplé.

20. Dispositif de conditionnement d'air selon la revendication 13, dans lequel la barre d'installation (18) comprend :
- un support (181) coudé en une partie prédéterminée avec une longueur prédéterminée ; et
- au moins une patte coudée (182), formée sur une surface inférieure du support (181) et coudée avec une longueur prédéterminée ; et
- une nervure (183) formée sur une partie centrale intérieure de la patte coudée (182).

21. Dispositif de conditionnement d'air selon la revendication 20, dans lequel le panneau arrière (16) comprend :
- une surface (166) de support pour recevoir le support (181) ;
- un trou (187) pour patte coudée formé dans la surface de support pour recevoir la patte coudée (182) ; et
- une fente (168) pour nervure pour recevoir la nervure (183) de la barre d'installation (18).

22. Dispositif de conditionnement d'air selon la revendication 20, dans lequel l'extrémité coudée du support (181) de la barre d'installation (18) est mise en adhérence avec une surface extérieure du boîtier d'installation (17, 27) ou insérée dans le boîtier d'installation (17, 27).

23. Dispositif de conditionnement d'air selon la revendication 13, dans lequel le boîtier d'installation (17) comprend un trou (173) d'aspiration d'air communiquant avec le conduit d'alimentation (31) et un trou (172) d'échappement d'air communiquant avec le conduit d'échappement (32), et le trou (173) d'aspiration d'air et le trou (172) d'échappement d'air traversent le boîtier d'installation (17) dans le sens de l'avant vers l'arrière.

24. Dispositif de conditionnement d'air selon la revendication 13, dans lequel le boîtier d'installation (27) comprend un trou (273) d'aspiration d'air communiquant avec le conduit d'alimentation (31) et un trou (272) d'échappement d'air communiquant avec le conduit d'échappement (32), et le trou (273) d'aspiration d'air et le trou (272) d'échappement d'air traversent le boîtier d'installation (27) depuis une surface avant jusqu'à une surface supérieure.

25. Dispositif de conditionnement d'air selon la revendication 1, comprenant en outre :
- un guide (165) de décharge monté de façon détachable le long d'un bord d'une surface inférieure du panneau arrière (16) pour guider la décharge d'air, un trou (169a) de pénétration de câblage étant formé dans une extrémité du panneau arrière (16).

26. Dispositif de conditionnement d'air selon la revendication 25, dans lequel le guide (165) de décharge comprend une pluralité de butées (165a) en saillie formées sur un bord, et le panneau arrière (16) comprend en outre une pluralité de cavités (165c) pour butées, les cavités (165c) étant formées dans un bord pour recevoir les butées (165a) en saillie.

27. Dispositif de conditionnement d'air selon la revendication 25, comprenant en outre :
- un bossage (165b) de couplage formé sur un bord du guide (165) de décharge ; et
- un bossage (160) de couplage correspondant, formé sur la surface inférieure du panneau arrière (16).

28. Dispositif de conditionnement d'air selon la revendication 25, dans lequel le panneau arrière (16) comprend en outre des nervures (161) de guidage s'étendant à partir de bords du trou d'aspiration (163) et du trou d'échappement (162).

29. Dispositif de conditionnement d'air selon la revendication 25, dans lequel le guide (165) de décharge est monté de façon inclinée sous un angle prédéterminé sur le bord de la surface inférieure du panneau arrière (16).

30. Dispositif de conditionnement d'air selon la revendication 18, dans lequel l'extrémité de la monture (201) de moteur est espacée d'une distance prédéterminée du panneau arrière (16) par l'organe (202) d'amortissement de vibrations.

31. Dispositif de conditionnement d'air selon la revendication 18, dans lequel l'organe (202) d'amortissement de vibrations comprend au moins une gorge formée dans une surface extérieure et ayant une forme analogue à une bande.

32. Dispositif de conditionnement d'air selon la revendication 19, comprenant en outre :
- un panneau de commande (21) couplé de manière détachable à un côté du guide (12) de couvercle ; et
- un organe d'occultation (23) occultant au moins une partie de la grille de décharge (141).

33. Dispositif de conditionnement d'air selon la revendication 32, dans lequel le panneau de commande (21) est positionné sous le boîtier de commande (19).

34. Dispositif de conditionnement d'air selon la revendication 32, dans lequel le panneau de commande (21) comprend un substrat de PCB (carte à circuits imprimés, *Printed Circuit Board* en anglais) d'affichage monté sur une surface arrière.

35. Dispositif de conditionnement d'air selon la revendication 19, comprenant en outre :
- une bague de sécurité (128) reliée à un côté d'une surface intérieure du guide (12) de couvercle ; et
- un organe (117) de connexion de bague de sécurité, formé sur une surface arrière du couvercle avant (11), pour couplage à la bague de sécurité (128).

36. Dispositif de conditionnement d'air selon la revendication 19, comprenant en outre :
- un capteur de détection de remplacement de filtre, monté sur une surface arrière du guide (12) de couvercle ; et
- une nervure (118) de détection formée sur un côté d'une surface arrière du couvercle avant (11) pour établir sélectivement un contact avec le capteur de détection de remplacement de filtre, selon la fermeture et l'ouverture du couvercle avant (11).

37. Dispositif de conditionnement d'air selon la revendication 36, dans lequel un contrôleur du dispositif de conditionnement d'air détermine qu'un filtre est remplacé lorsque la nervure (118) de détection est détachée du capteur de détection de remplacement de filtre et mise de nouveau en butée sur le capteur de détection de remplacement de filtre.

38. Dispositif de conditionnement d'air selon la revendication 19, comprenant en outre une gorge (120) pour manette, formée dans une surface extérieure du guide (12) de couvercle, à une profondeur prédéterminée.

39. Dispositif de conditionnement d'air selon la revendication 19, comprenant en outre au moins une nervure de renforcement (125), qui s'étend sur une longueur prédéterminée à partir d'un bord intérieur du guide (12) de couvercle et se couple à la grille (14).

40. Dispositif de conditionnement d'air selon la revendication 19, comprenant en outre :
- un crochet (126) d'accouplement faisant saillie d'une surface intérieure du guide (12) de couvercle ; et
- une patte (142) de couplage faisant saillie d'un bord de la grille (14) pour couplage au crochet (126) d'accouplement.

41. Dispositif de conditionnement d'air selon la revendication 19, comprenant en outre :
- au moins un crochet (114) d'accouplement faisant saillie d'un bord du couvercle avant (11) ; et
- un trou (122) de couplage formé dans le guide (12) de couvercle pour recevoir le crochet (114) de couplage.

42. Dispositif de conditionnement d'air selon la revendication 19, comprenant en outre :
- une paire de charnières (115) faisant saillie à partir des angles d'une surface arrière du couvercle avant (11) ; et
- des trous (122) de charnière formés dans une extrémité du guide (12) de couvercle pour recevoir les paires de charnières (115).

43. Dispositif de conditionnement d'air selon la revendication 32, dans lequel l'organe d'occultation (23) est monté de manière détachable sur la grille de décharge (141).

44. Dispositif de conditionnement d'air selon la revendication 32, comprenant en outre des extrémités (233) de crochet s'étendant depuis chaque côté et/ou une partie centrale de l'organe d'occultation (23).

45. Dispositif de conditionnement d'air selon la revendication 1, comprenant en outre :
- un boîtier de filtre (147) formé sur une surface inférieure de la grille (14), le boîtier de filtre (17) recevant l'ensemble de filtre (13) ; et
- un guide d'air (144) formé sur une partie supérieure de la grille (14).

46. Dispositif de conditionnement d'air selon la revendication 1, dans lequel la grille de décharge (141) comprend une partie qui est coudée vers le bas et divisée en deux parties par une paroi de compartimentage (146).

47. Dispositif de conditionnement d'air selon la revendication 46, dans lequel l'une des deux parties est une région d'un trou (148b) d'introduction d'air extérieur, et l'autre des deux parties est une région d'une grille d'échappement (148) pour expulser de l'air intérieur.

48. Dispositif de conditionnement d'air selon la revendication 45, dans laquelle boîtier de filtre (147) comprend au moins une nervure (147a) de maintien de filtre formée sur un bord inférieur de manière à empêcher le filtre d'être enlevé de façon indésirable.

49. Dispositif de conditionnement d'air selon la revendication 45, comprenant en outre un capteur de pollution d'air monté sur une surface extérieure du boîtier de filtre (147).

50. Dispositif de conditionnement d'air selon la revendication 45, comprenant en outre :
- une nervure (147b) de montage de capteur formée sur une surface extérieure du boîtier de filtre (147) pour montage du capteur de pollution d'air ; et
- un crochet (147e) de fixation de capteur s'étendant à partir du boîtier de filtre (147) pour fixation du capteur de pollution d'air.

51. Dispositif de conditionnement d'air selon la revendication 1, comprenant en outre un flasque (145) monté de façon détachable sur une partie centrale de la grille (14).

52. Dispositif de conditionnement d'air selon la revendication 51, dans lequel le flasque (145) comprend au moins un bossage (145e) de couplage formé sur une surface inférieure et ayant une longueur prédéterminée, et une nervure (145b) de couplage s'étendant depuis une surface supérieure et coudée sous un angle prédéterminé, et
la grille comprend un trou (140a) de couplage de flasque à travers lequel un organe de fixation passe pour couplage avec le bossage (145b) de couplage du flasque (145) le traversant, et un trou (140b) pour nervure pour recevoir la nervure (145b) de couplage du flasque (145).

53. Dispositif de conditionnement d'air selon la revendication 45, dans lequel la grille (14) comprend un orifice (143) formé en une partie centrale et ayant un diamètre prédéterminé, l'orifice (143) étant formé de manière à ce qu'une largeur entre une extrémité du guide d'air (144) et l'orifice soit différente d'une largeur entre l'autre extrémité du guide d'air (144) et l'orifice (143).

54. Dispositif de conditionnement d'air selon la revendication 1,
dans lequel la boîte de commande (19) comprend un boîtier (191) et un couvercle (192) pour protéger des composants électriques,
la grille comprend en outre un bossage (149a) de couplage et une nervure (149b) de couplage formée sur un bord,
le boîtier (191) étant monté sur une surface inférieure de la grille (14) par le bossage (149a) de couplage et la nervure (149b) de couplage.

55. Dispositif de conditionnement d'air selon la revendication 54, dans lequel la nervure (149b) de couplage est coudée en une forme en "Γ", et une nervure (196) d'insertion est formée sur une surface extérieure du boîtier pour couplage à la nervure (149b) de couplage par coulissement.

56. Dispositif de conditionnement d'air selon la revendication 54, comprenant en outre une nervure (193) de fixation s'étendant depuis une surface extérieure du boîtier (191) et couplée au bossage (149a) de couplage de la grille (14) par un organe de fixation.

57. Dispositif de conditionnement d'air selon la revendication 54, comprenant en outre :
- un crochet (195) de couplage faisant saillie d'une surface extérieure du boîtier (191) dans le sens vers le haut ; et
- une nervure (198) de couplage faisant saillie d'un côté inférieur d'une surface extérieure du couvercle (192) pour couplage au crochet (195) de fixation par coulissement.

58. Dispositif de conditionnement d'air selon la revendication 57, comprenant en outre une nervure (197) de guidage formée sur le boîtier (191) et située à une distance prédéterminée du crochet (195) de couplage, la nervure (197) de guidage s'étendant sur une longueur prédéterminée dans une direction horizontale pour guider le déplacement de la nervure (198) de couplage.

59. Dispositif de conditionnement d'air selon la revendication 54, comprenant en outre une plaque métallique couvrant le boîtier (191) et/ou le couvercle (192).
